# EUROPEAN PATENT APPLICATION

(11) **EP 4 349 177 A1**
(43) Date of publication of application: **10.04.2024**
(21) Application number: 22816072.7
(22) Date of filing: 30.05.2022
(51) Int. Cl.: A21D 13/066, A21D 2/18, A21D 2/26, A21D 2/34, A21D 2/36

(54) **PUFFED FOOD**

(30) Priority: 31.05.2021 JP 2021091985
(71) Applicant: MEIJI CO., LTD, Chuo-ku Tokyo 104-8306 (JP)
(72) Inventor: ICHIMURA, Takefumi, Hachioji-shi, Tokyo 192-0919 (JP); TADA, Megumi, Hachioji-shi, Tokyo 192-0919 (JP)
(74) Representative: Vossius & Partner Patentanwälte Rechtsanwälte mbB
(86) International application number: PCT/JP2022/022019
(87) International publication number: WO 2022/255325

(57) **Abstract**

This invention provides an expanded food containing a milk protein in a proportion of 75 mass% or more based on the total protein and not substantially containing a wheat-derived protein, wherein (A) the expanded food has (1) a hardness, as determined by a texture measurement, within the range of 0.1 to 0.35 N and (2) a cohesiveness, as determined by a texture measurement, within the range of 0.5 to 0.71, and/or (B) the expanded food has values of (1) elastic modulus and (2) viscosity, as determined by a creep test, within the following ranges:
(1a) instantaneous elastic modulus: 190 to 460 Pa;
(1b) delayed elastic modulus: 4400 to 13000 Pa;
(2a) delayed viscosity: 38000 to 117000 Pa•s; and
(2b) permanent viscosity: 240000 to 820000 Pa•s.

## Description

### Technical Field

The present disclosure relates to an expanded food having novel physical properties. The present disclosure preferably relates to an expanded food that does not substantially contain a wheat-derived protein and that has novel physical properties.

### Background Art

The pore structure of bread, which is a type of expanded food, is called *"sudachi* [pore structure]" and is considered an important factor in determining the texture of bread. At the production site, *sudachi* is considered an important quality, and it is believed that trained experts can predict the texture of bread from the conditions of *sudachi* by visual observation (Non-patent Literature (NPL) 1 and 2).

In recent years, the demand for gluten-free food is increasing. In the past, gluten-free food was construed as food for some people who were unable to consume gluten due to, for example, celiac disease or intolerance to gluten; however, with the recent rise in diet and health consciousness, the demand for gluten-free food is increasing even from general consumers.

Multiple patent applications have been filed for gluten-free food as listed below.

For example, Patent Literature (PTL) 1 discloses a method for producing a bread-like food product that has a fluffy texture and that does not contain a wheat-derived protein. This method comprises baking a dough containing an egg, unripened cheese or fermented milk, a leavening agent, a plant-derived protein (excluding a wheat-derived protein) or milk protein, and xanthan gum and/or guar gum. This bread-like food product obtained by using an egg, cheese, and a leavening agent, such as baking powder, as the main ingredients, without using a wheat-derived protein, is known as "cloudy bread" due to its fluffy texture.

PTL 2 discloses a method for producing a bakery product mainly containing a soy protein in place of a wheat-derived protein. In this method, a bakery dough containing 5 to 30 wt% of a powdered soybean protein, 10 to 30 wt% of oil, 2 to 20 wt% of eggs, and 45 to 58 wt% of water, and containing starches in an amount of less than 50 wt% based on the powdered soybean protein, is molded and then heated to be expanded. This bakery product has a soft skin and a soft texture, nicely melts in the mouth, and has a texture similar to that of bread or donuts even without using any wheat flour.

PTL 3 discloses a method for producing baked confectionery that is free of gluten. In this method, a dough or batter containing about 10 to 75 mass% of whole egg, about 5 to 15 wt% of a water-dispersible soy protein isolate, about 0.1 to 2.0 wt% of hydrocolloid, and water, on a wet basis, and not containing wheat flour is baked to form a support matrix. Because of its low carbohydrate content, this baked confectionery is regarded as useful for dietary weight-loss programs, such as low-carb diets.

Additionally, although it is not gluten-free food, many proposals have been made for bakery products containing fermented milk or a milk-fermented product, such as yogurt, as well as for methods for producing breads by using lactic acid bacteria, as in PTL 1 mentioned above.

For example, PTL 4 discloses producing bread by adding fermented milk without sterilization to bread dough containing wheat flour as the main ingredient, thereby achieving effects, such as increasing the tensile strength of the bread dough (the dough becomes tighter), shortening the fermentation time, obtaining fine-textured, high-quality bread, and delaying the aging process of the bread.

PTL 5 discloses producing breads by adding fermented milk in an amount of 1 to 30 parts by weight per 100 parts by weight of wheat flour and allowing lactic acid bacteria to present in the dough in a viable state to achieve aging. PTL 5 discloses that this method produces bread having a good taste with a rich milk flavor and butter flavor.

PTL 6 discloses producing bread by baking bread dough containing hops yeast and grain flour, such as wheat flour, and additionally lactic acid bacteria. PTL 6 discloses that the presence of lactic acid bacteria can impart a unique refreshing aroma to the bread.

PTL 7 discloses producing confectionery with fermented flavor by conducting, one or more times, an operation of fermenting wheat flour and/or rye flour with yeast fungi and lactic acid bacteria to obtain a primary fermentation substrate, adding thereto grain flour other than the above to perform fermentation, and then adding grain flour other than wheat flour and rye flour to the resulting fermentation product to perform fermentation to thus prepare a fermented grain flour product; blending eggs and seasonings, such as fats and oils, with the prepared fermented grain flour product; molding the resulting product; and baking it. By doing so, according to PTL 7, confectionery that has a high nutritional value, sufficient fermentation flavor, umami, good water retention, and good texture, such as flexibility and extensibility, is obtained.

PTL 8 discloses producing breads by adding water containing lactic acid bacteria to partially peeled wheat grains having a specific peeling rate and particle size, subjecting the mixture to soaking treatment to prepare a soaked product, and using the prepared soaked product. By doing this, according to PTL 8, breads that have a rich aroma with excellent sweetness, as well as a good balance between the hardness of wheat grains and the softness of the surrounding area are obtained due to the influence of the partially peeled wheat grains contained in the bread.

PTL 9 discloses producing bread by adding lactic acid bacteria sponge obtained by fermentation with lactic acid bacteria to bread dough raw materials that include wheat flour, carbohydrates, and water as raw materials. By doing so, according to PTL 9, the dough is cooked well during baking, the bread skin is made thinner, the texture becomes finer, and bread with excellent elasticity and water retention can be produced.

PTL 10 discloses producing bread by adding a flavor liquid obtained by fermenting molasses with lactic acid-producing bacteria in the process of producing bread containing wheat flour as the main raw material, thus imparting a unique and unconventional flavor and aroma.

PTL 11 discloses a method for producing sour bread by using wheat flour or rice flour as the raw material flour. Specifically, PTL 11 discloses that the use of a production method in which a secondary raw material flour is added to a lactic acid dough obtained by fermenting a primary raw material flour with lactic acid bacteria, and the resulting dough is kneaded sufficiently, followed by baking, can produce sour bread in a short time and in a large amount.

PTL 12 also discloses a production method for sour bread. PTL 12 discloses that the GABA production amount is significantly increased by using a combination of mesophilic *Lactococcus* and thermophilic lactic acid bacteria in the production of starting sourdough containing grain flour, such as wheat flour or rye flour, as the raw material.

PTL 13 and PTL 14 disclose a method for producing a pizza crust by using a lactic acid bacteria-containing dairy food product, such as yogurt. PTL 13 discloses producing a pizza crust by adding bound water comprising milk, yogurt, and cheese to wheat flour, which is the main raw material of pizza dough, followed by kneading and molding. By doing this, according to PTL 13, textures and flavors comparable to those obtained when the crust was baked immediately after kneading are achieved even if it is frozen or refrigerated. PTL 14 discloses producing a pizza crust (breads) by adding a lactic acid bacteria-containing dairy product and bread yeast to grain flour and then adding dough starter to the pizza dough. This pizza crust, according to PTL 14, has a good baking color by baking and has savory and rich flavors, and a moist and glutinous texture.

PTL 15 discloses a composite biscuit product containing a filling comprising a yogurt powder containing live lactic cultures and 10 to 30 wt% of dry starch having a water content of less than 8 wt%, wherein the filling has a water activity of 0.05 to 0.25 (as measured with an AquaLab CX-2 or series 3), and one or more biscuit parts containing grain flour. This composite biscuit product, according to PTL 15, has an improved shelf life and stability by containing live lactic cultures in the presence of dried starch.

PTL 16 discloses a low-calorie biscuit product containing 0.2 to 0.6 wt% of yogurt powder as a flavoring agent. However, this yogurt powder is a flavoring agent, and this biscuit product is a gluten-containing product comprising 40 to 42 wt% of wheat flour, 1 to 2.5 wt% of gluten, and 18 to 23 wt% of starch.

As explained above, these techniques attempt to improve the flavor, texture, shelf life, etc. of bread etc. by adding a milk-fermented product or lactic acid bacteria to the dough of bread, pizza, etc. containing grain flour, such as wheat flour, as the main raw material. In other words, these techniques are intended for food products that contain, as a protein, gluten, which is a wheat-derived protein.

### Citation List

### Patent Literature

PTL 1: JP2018-174860A
PTL 2: JP2008-81882A
PTL 3: US Patent No. 07595081
PTL 4: JPS42-1463B
PTL 5: JPH02-215334A
PTL 6: JP2004-321097A
PTL 7: JP2004-357631A
PTL 8: JP2008-17802A
PTL 9: JP2009-142181A
PTL 10: JP2011-97897A
PTL 11: JPH11-266775A
PTL 12: JP2007-110953A
PTL 13: JP2003-259796A
PTL 14: JP2014-23454A
PTL 15: EP Patent No. 2885979
PTL 16: EP Patent No. 2392215

### Non-patent Literature

NPL 1: Japan Institute of Baking, Evaluation criteria for bread (1), Bread Technology, 598 (2004)
NPL 2: Scanlon, M.G. and Zghal, M.C., Bread properties and crumb structure. Food Res. Int., 34, 841-864 (2001)

### Summary of Invention

### Technical Problem

A problem to be solved by the present disclosure is to provide an expanded food having novel physical properties. Preferably, a problem to be solved by the present disclosure is to provide an expanded food that does not substantially contain a wheat-derived protein and that has novel physical properties. More preferably, a problem to be solved by the present disclosure is to provide an expanded food that does not substantially contain a wheat-derived protein and that has a novel texture in addition to novel physical properties.

### Solution to Problem

In order to solve the above problems, the present inventors conducted extensive research and found that heat treatment of a dough composition comprising a milk protein in a proportion of 75 mass% or more based on the total protein, without substantially comprising a wheat-derived protein, such as gluten, can cause the dough composition to expand like bread and form a support matrix. The present inventors also found that the thus-obtained expanded food has a pore structure (visual observation) different from that of bread (wheat bread) produced by using wheat flour as a raw material, has hardness and cohesiveness, as determined by a texture measurement using a rheological measurement device, different from those of wheat bread, and has a permanent viscosity (viscosity ηN), as determined by a creep test using a rheological measurement device, different from that of wheat bread, whereby confirming that the expanded food has novel physical properties that are different from those of wheat bread. Additionally, the inventors also confirmed, based on a sensory test, that the expanded food above has a novel texture different from that of wheat bread.

The present disclosure has been completed through further research based on such findings. The present disclosure includes the following embodiments.

### Expanded Food

Item 1. An expanded food containing a milk protein in a proportion of 75 mass% or more based on the total protein and not substantially containing a wheat-derived protein,
   wherein
   (A) the expanded food has (1) a hardness, as determined by a texture measurement, within the range of 0.1 to 0.35 N and (2) a cohesiveness, as determined by a texture measurement, within the range of 0.5 to 0.71, and/or
   (B) the expanded food has values of (1) elastic modulus and (2) viscosity, as determined by a creep test using a rheometer, within the following ranges:
      (1a) instantaneous elastic modulus: 190 to 460 Pa;
      (1b) delayed elastic modulus: 4400 to 13000 Pa;
      (2a) delayed viscosity: 38000 to 117000 Pa•s; and
      (2b) permanent viscosity: 240000 to 820000 Pa•s.
Item 2. The expanded food according to Item 1, wherein the milk protein contains a protein derived from a milk-fermented product.
Item 3. The expanded food according to Item 1 or 2, wherein the expanded food contains one or more edible compositions that comprise a milk protein, and at least one of the edible compositions is a milk-fermented product.
Item 4. The expanded food according to any one of Items 1 to 3, which is obtained by subjecting a dough composition comprising (a) a milk protein in a proportion of 75 mass% or more based on the total protein, (b) a starch, (c) a leavening agent, and (d) water to heat treatment to cause the dough composition to expand and form a support matrix.
Item 5. The expanded food according to Item 4, wherein (b) the starch is at least one member selected from the group consisting of natural starches and processed starches.
Item 6. The expanded food according to Item 4 or 5, wherein (c) the leavening agent is at least one member selected from the group consisting of yeast, baking powder, baking soda, and ispata.
Item 7. The expanded food according to any one of Items 4 to 6, which further contains (e) a thickener.
Item 8. The expanded food according to any one of Items 1 to 7, which does not substantially contain a processed rice product.
Item 9. The expanded food according to any one of Items 1 to 8, which does not contain at least one member selected from the group consisting of eggs and egg-derived ingredients, or does not contain all members in the group.

### Advantageous Effects of Invention

Although the expanded food of the present disclosure has a pore structure similar to the pore structure (*sudachi*) of conventional bread (wheat bread), which is produced by using wheat flour as a raw material, the expanded food of the present disclosure is a novel food product that is significantly different from wheat bread in terms of hardness and cohesiveness, as determined by a texture measurement, and/or permanent viscosity, as determined by a creep test. Further, although the texture of the expanded food of the present disclosure is similar to that of bread in terms of softness in contact with the teeth, the expanded food has a novel texture that is different from that of bread since it adheres or sticks during mastication in the oral cavity to a lesser degree and has a light texture (less clinging sensation (i.e., is less sticky) to the teeth and in the oral cavity when moistened with saliva in the middle mastication stage), and since the moistened bolus in the late mastication stage in the oral cavity easily breaks down (i.e., quickly and easily breaks down in the oral cavity). Accordingly, the expanded food according to the present disclosure has a characteristic novel texture and is easily masticated and swallowed.

Additionally, the expanded food of the present disclosure can be produced without substantially containing a wheat-derived protein, such as gluten, and can provide a bread-like food that is free of gluten. Furthermore, these gluten-free, bread-like food products can shorten the production time since the process of kneading the dough and the process of allowing the dough to rest can be omitted or shortened.

### Brief Description of Drawings

Fig. 1: A diagram showing an example of the compression curve (texture profile) formed due to deformation by two-time compression in a texture measurement. In Fig. 1, H indicates hardness, B indicates brittleness, C indicates adhesive power, T1 and T2 indicate depression, A3 indicates adhesion, and A2/A1 indicate cohesiveness.
Fig. 2 (1): An illustration of the eating side and vertical side of an expanded food. Fig. 2 (2): An illustration of the test specimen used for the photography of Experimental Example 1.
Fig. 3: A diagram showing a common creep curve obtained in a creep test and a four-element mechanical model of spring and dashpot. In Fig. 3, ε(t) indicates distortion, P₀ indicates constant stress, E₀ indicates a Hookean elastic material, E₁, E₂ indicate the elastic modulus of a Voigt body, η_{N} indicates Newtonian viscosity, η₁, η₂ indicate the viscosity of the Voigt body, and t indicates time.
Fig. 4: Images of (A) the eating side and (B) the vertical side of the internal cross-section of the bread-like food in Example 1.
Fig. 5: Images of (A) the eating side and (B) the vertical side of the internal cross-section of the bread-like food in Example 2.
Fig. 6: Images of (A) the eating side and (B) the vertical side of the internal cross-section of the bread-like food in Example 3.
Fig. 7: Images of (A) the eating side and (B) the vertical side of the internal cross-section of the bread-like food in Example 5.
Fig. 8: Images of (A) the eating side and (B) the vertical side of the internal cross-section of the bread-like food in Example 6.
Fig. 9: Images of (A) the eating side and (B) the vertical side of the internal cross-section of the bread-like food in Example 7.
Fig. 10: Images of (A) the eating side and (B) the vertical side of the internal cross-section of the bread-like food in Example 8.
Fig. 11: Images of (A) the eating side and (B) the vertical side of the internal cross-section of the bread-like food in Example 9.
Fig. 12: Images of (A) the eating side and (B) the vertical side of the internal cross-section of the bread-like food in Example 10.
Fig. 13: Images of (A) the eating side and (B) the vertical side of the internal cross-section of the bread of Comparative Example 1.
Fig. 14: Images of (A) the eating side and (B) the vertical side of the internal cross-section of the bread in Comparative Example 2.
Fig. 15: Images of (A) the eating side and (B) the vertical side of the internal cross-section of the bread in Comparative Example 3.
Fig. 16: Images of (A) the eating side and (B) the vertical side of the internal cross-section of the bread in Comparative Example 4.
Fig. 17: Images of (A) the eating side and (B) the vertical side of the internal cross-section of the bread in Comparative Example 5.
Fig. 18: Images of (A) the eating side and (B) the vertical side of the internal cross-section of the bread in Comparative Example 6.
Fig. 19: Images of (A) the eating side and (B) the vertical side of the internal cross-section of the bread in Comparative Example 7.
Fig. 20: Images of (A) the eating side and (B) the vertical side of the internal cross-section of the bread in Comparative Example 8.
Fig. 21: A diagram showing the results of the texture measurement performed in Experimental Example 2 (cohesiveness and hardness).

### Description of Embodiments

### (I) Expanded food

"Expanded food" typically refers to processed food produced by subjecting a protein, a carbohydrate, a leavening agent, and water as main ingredients to heat treatment, such as baking, deep-frying, steaming, or baking in a covered pan. The processed food is expanded by heat treatment, and the support composed of heat-treated protein, carbohydrate (mainly starch), etc. forms a mesh-like solid region (three-dimensional mesh structure) (also referred to as a "support matrix structure").

Examples of such expanded food typically include bread, dried bread products, cakes, waffles, puffs for cream puffs, donuts, fried pastries, pies, pizza, and crepes. Expanded food also includes food products also called "bakery products," which are prepared by baking dough containing grain flour in an oven or the like. Examples of grain flours as used here include flours of grains of the Poaceae family (wheat flour, rice flour, barley flour, rye flour, oats flour, adlay flour, corn flour, barnyard millet flour, foxtail millet flour, proso millet flour, and teff flour), flours of pulses (roasted soybean flour, soybean flour, chickpea flour, pea flour, and mung bean flour), pseudocereal flours (buckwheat flour and amaranth flour), potato and root flours (potato starch, tapioca flour, kudzu starch, and potato flour), and nut flours (chestnut flour, acorn flour, and coconut flour). Examples of bread include meal bread (e.g., *shokupan* [Japanese soft white bread baked in a square pan], rye bread, baguette, hardtack, variety bread, and rolls), filled and stuffed bread (e.g., hot dogs, hamburgers, and pizza pies), sweet bread (e.g., buns with jam filling, buns with sweet bean filling, buns with custard filling, raisin bread, melonpan, sweet rolls, croissants, brioche, Danish pastries, and coronet bread), steamed buns (e.g., steamed meat buns, Chinese buns, and steamed sweet bean buns), and special bread (e.g., grissini, muffins, and naan). Examples of dried bread products include rusks and bread crumbs. Examples of cakes include steamed cake, sponge cake, butter cake, roll cake, pancake, bouchée, baumkuchen, pound cake, cheese cake, and snack cake.

The expanded food, which is the subject of the present disclosure, is an expanded food containing a milk protein in a proportion of 75 mass% or more based on the total protein and not substantially containing a wheat-derived protein, wherein the expanded food has (A) the following physical property values, as determined by a texture measurement, and/or (B) physical property values, as determined by a creep test, within the following ranges.
(A) Physical property values, as determined by a texture measurement:
   (1) hardness of 0.1 to 0.35 N, preferably 0.10 to 0.35 N, and
   (2) cohesiveness of 0.5 to 0.71, preferably 0.50 to 0.71.
(B) Physical property values, as determined by a creep test:
   (1) Elastic modulus:
      (1a) instantaneous elastic modulus: 190 to 460 Pa, and
      (1b) delayed elastic modulus: 4400 to 13000 Pa; and
   (2) Viscosity:
      (2a) Delayed viscosity: 38000 to 117000 Pa•s, and
      (2b) Permanent viscosity: 240000 to 820000 Pa•s.

The physical property values (A) and (B) above are obtained in terms of the internal portion of the expanded food.

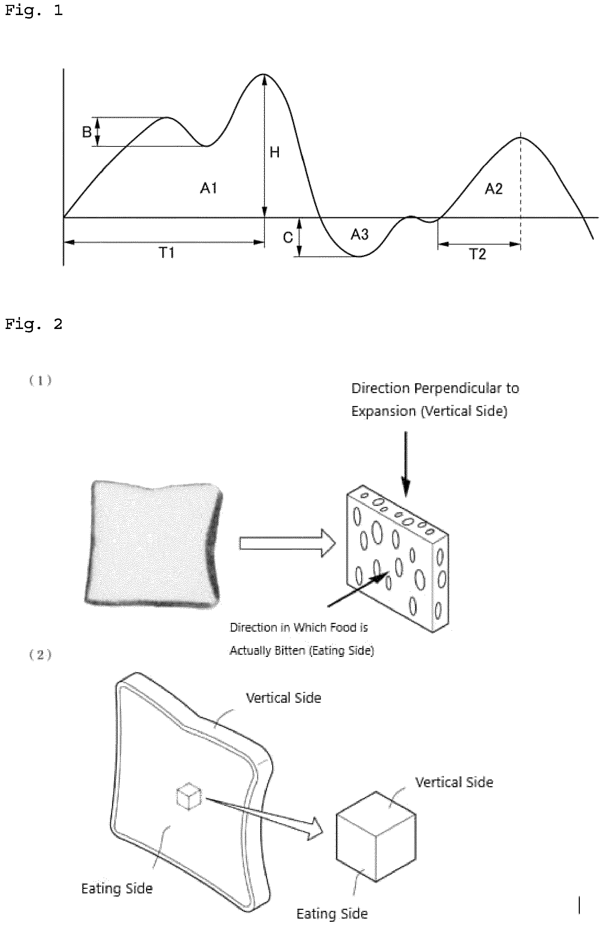

The internal portion of expanded food refers to a portion that is not the surface of the expanded food and that is not the hardened portion of the surface layer (the hardened portion is called "crust" in the case of shokupan). Preferably, a cube of 2 cm per side cut out from the center portion, including the center, of the expanded food can be used as a test specimen to measure each of the physical property values (see Fig. 2(2)).

### (A) Texture Measurement

In the present disclosure, the texture measurement is a physical property measurement test to evaluate the feeling (hardness and chewiness) (texture) when food is chewed with the teeth. In the present disclosure, this test is performed while the target food for measurements does not contain water that is equivalent to saliva. Typically, the test can be performed using the texture mode of a rheological measurement device (a rheometer or a creep meter).

In the texture measurement, a sample is set on the sample stand of a rheological measurement device, the sample stand is then moved up to bring the sample into contact with the plunger and to compress the sample to a specific distance (compression distance), the sample table is then lowered to separate the sample from the plunger, and the sample is compressed again. In this manner, the hardness and chewiness when food is chewed with the teeth, as well as the stickiness of the food itself, can be evaluated. Fig. 1 shows an example of the compression curve (texture profile) obtained when the sample was deformed by two-time compression in the texture measurement. Table 1 shows the meanings of the symbols in Fig. 1 and the characteristics that can be evaluated in view of the symbols. In Fig. 1, the areas of A1 to A3 represent energy amounts and are equivalent to integral values of measurement loads.

**Table 1**

| Meaning of Symbols | |
|---|---|
| Hardness (H) | Maximum test force (N) measured by applying a load to the sample with a plunger. |
| | Force required to achieve a certain deformation of the sample (food). The internal bonding force for shaping the food can be evaluated. |
| Brittleness (B) | The force that causes the sample to break. |
| | Corresponding to the force with which food breaks down in the mouth. |
| Adhesiveness (A3) | The force (N) with which the plunger is pulled by the sample when the sample stand is lowered. |
| | Indicating stickiness and adherence in the mouth. |
| Cohesiveness (A2/A1) | The ratio between the first load area and the second load area (energy) when a load is applied twice consecutively. When a load is applied to food, the food deforms or is broken. Thus, the ratio indicates the percentage of elasticity remaining after food is chewed once. |
| Elasticity (T2/T1) | The ratio of depression and displacement when a load is applied twice consecutively to the sample (food) with a plunger. |

Specifically, a cube of 2 cm per side is cut out from the internal portion of the target expanded food, preferably from the center portion, including the center, of the expanded food (see Fig. 2(2)). The cube can be used as a test specimen for measurement by applying a load to the eating side thereof by bringing the sample into contact with the plunger of a rheological measurement device, and for analysis by recording and analyzing the load curve with an analyzer. Fig. 2(1) shows an illustrative diagram of the eating side using a slice of bread (*shokupan*) as an example. The measurement device, method, and conditions are described in detail in Experimental Example 2. The "hardness" measured according to such methods and conditions is to evaluate the force required for deformation due to longitudinal compression with respect to the eating side, and reflects the force required for deformation due to longitudinal compression by the teeth with respect to the eating side. Thus, the hardness is considered to correlate with the "hardness at the start of mastication" in the first mastication stage in the sensory evaluation. Therefore, a low "hardness" means soft "hardness at the start of mastication" in the first mastication stage. The "cohesiveness" indicates the ratio between the energy of the first compression and the energy of the second compression. Therefore, low "cohesiveness" indicates that the food breaks down and softens quickly when chewed.

Accordingly, when the "hardness is low" and the "cohesiveness is low" in the results of the texture measurement, such results indicate that the texture of the tested food itself (the food not moistened with saliva) is soft and easily broken.

The expanded food of the present disclosure is characterized by having (1) a hardness (load) within the range of 0.1 to 0.35 N and (2) a cohesiveness within the range of 0.5 to 0.71 when measured according to the method and conditions described in Experimental Example 2.

Examples of preferable embodiments include the following.
(1) Preferable hardness and cohesiveness:
   hardness (load): 0.125 to 0.3 N (preferably 0.125 to 0.30 N); and
   cohesiveness: 0.55 to 0.7 (preferably 0.55 to 0.7).
(2) More preferable hardness and cohesiveness:
   hardness (load): 0.15 to 0.25 N; and
   cohesiveness: 0.60 to 0.69.
(3) Even more preferable hardness and cohesiveness:
   hardness (load): 0.175 to 0.20 N; and
   cohesiveness: 0.65 to 0.68.

A value obtained by dividing the hardness (load) (N) by the contact area of the plunger corresponds to the hardness (stress, N/m²); thus, if the plunger is constant, the hardness (stress) can also be used instead of the hardness (load).

### (B) Creep Test

The creep test is a test to measure the amount of deformation and the amount of recovery of a sample over time when a specific force is applied to the sample, and can measure the basic physical properties of the sample, such as viscosity and elastic modulus. Typically, the test can be performed using the creep mode of a rheological measurement device.

In the creep test, a sample is set on the sample stand of a rheological measurement device, the sample stand is then moved up to bring the sample into contact with the plunger and to increase the pressure by pressing the sample to achieve a specific stress, the sample is then continuously compressed to maintain a constant stress (retention of load), the plunger is then released so that the stress is zero, and the distortion is measured when the plunger is kept released so that the stress is maintained to be zero.

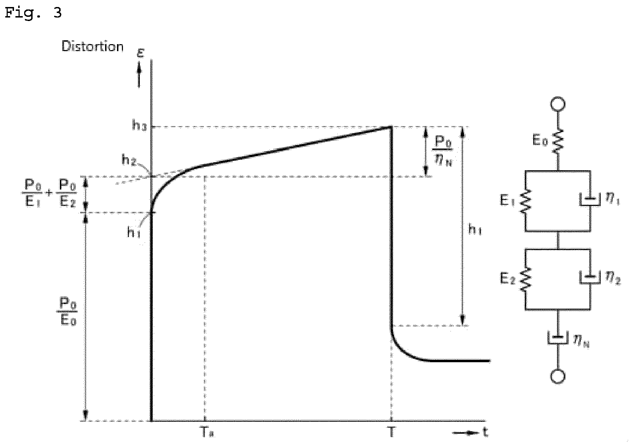

Fig. 3 shows an example of a typical creep curve. As shown in Fig. 3, the creep curve includes an instantaneous deformation section represented by the symbol h₁ (P₀/E₀), a delayed deformation section represented by the symbol h₁h₂ (P₀/E₁ + P₀/E₂), and a steady flow section represented by the symbol h₂h₃ (P₀/ηN). The test sample shows an elastic behavior according to Hooke's law in the instantaneous deformation section, an increase in the distortion proportional to time as in a Newtonian fluid in the steady flow section, and a behavior based on the combined action of elasticity and viscosity in the remaining delayed deformation section. Fig. 3 also shows a six-element mechanical model of a spring and dashpot.

Specifically, as in the texture measurement, a test specimen is prepared by cutting out a cube of 2 cm per side from the internal portion of the target expanded food. A load is then applied to the eating side thereof by bringing the sample into contact with the plunger of a rheological measurement device, and the resulting distortion over time is recorded with an analyzer. The instantaneous elastic modulus (elastic modulus E0 [Pa]), delayed elastic modulus (elastic modulus E1 [Pa]), delayed viscosity (viscosity η1 [Pa•s]), and permanent viscosity (viscosity ηN [Pa•s]) are then analyzed. The measurement device, method, and conditions are described in detail in Experimental Example 2.

Typically, the instantaneous elastic modulus (elastic modulus E0 [Pa]), delayed elastic modulus (elastic modulus E1 [Pa]), delayed viscosity (viscosity η1 [Pa•s]), and permanent viscosity (viscosity η_{N} [Pa•s]) can be explained as follows.

### (1) Instantaneous Elastic Modulus (Elastic Modulus E0 [Pa]): Hookean Elastic Material

The instantaneous elastic modulus represents a Hookean elastic material (shown as a spring) in the instantaneous deformation section. More specifically, the instantaneous elastic modulus indicates the elastic modulus of a spring in the instantaneous deformation section, which deforms instantaneously when a load is applied and recovers to its original height as soon as the load is removed. It corresponds to a value obtained by dividing stress by distortion.

Accordingly, the instantaneous elastic modulus refers to elasticity in a region in which the shape returns to the original when the applied force is released. Therefore, the instantaneous elastic modulus can be interpreted as the elasticity felt immediately after the start of chewing the target food with the teeth (chewiness immediately after the start of chewing).

### (2) Delayed Elastic Modulus (Elastic Modulus E1 [Pa]): Elastic Modulus of Voigt Body

The delayed elastic modulus represents the elastic modulus of a spring from among the elastic moduli of Voigt bodies in the delayed deformation section. Delayed deformation means that a spring deforms instantaneously when a load is applied, but the deformation is controlled by a dashpot, causing delayed deformation (spring and dashpot arranged in parallel). It corresponds to a value obtained by dividing stress by distortion.

### (3) Delayed Viscosity (Viscosity η1 [Pa•s]) : Viscosity of Voigt Body

The delayed viscosity represents the elastic modulus of a dashpot from among the viscosities of Voigt bodies in the delayed deformation section. It corresponds to a value obtained by multiplying the elastic modulus by delay time.

The delayed elastic modulus and delayed viscosity can be used to evaluate the state of the delayed deformation section over time, i.e., both elastic properties in which deformation occurs immediately when force is applied, and viscous properties in which delayed deformation occurs. Therefore, the delayed elastic modulus and delayed viscosity can be interpreted as the elasticity and viscosity of the target food in a state in which the food is beginning to be broken by applying force by chewing the food with the teeth (the chewiness when the food is beginning to be disintegrated by chewing).

### (4) Permanent Viscosity (Viscosity ηN [Pa•s]): Viscosity of Newtonian Fluid

The permanent viscosity represents the viscosity of a Newtonian fluid in the steady viscosity section (shown as a dashpot). It corresponds to a value obtained by multiplying the elastic modulus by delay time.

The "permanent viscosity" as used here refers to a steady deformation section, i.e., a region that shows viscous properties with the application of a load with the progress of compression and breaking down when force is applied. Specifically, the permanent viscosity represents a slope of viscosity increase when a load is applied.

Accordingly, a low "permanent viscosity" means that the viscosity does not increase easily even when a load is applied. This is due to, for example, the loss of the shape with the application of a load. Therefore, a low "permanent viscosity" means easily broken, which correlates to the "ease of breaking down the food itself" in the sensory evaluation.

The expanded food of the present disclosure is characterized by having the elastic modulus and viscosity within the following ranges when measured according to the methods and conditions described in Experimental Example 2.
(1) Elastic modulus:
   (a) instantaneous elastic modulus: 190 to 460 Pa; and
   (b) delayed elastic modulus: 4400 to 13000 Pa.
(2) Viscosity:
   (a) delayed viscosity: 38000 to 117000 Pa•s; and
   (b) permanent viscosity: 240000 to 820000 Pa•s.

In a preferable embodiment, for example, (2) (b) the permanent elastic modulus is within the following ranges: preferable permanent elastic modulus: 300000 to 750000 Pa•s, more preferable permanent elastic modulus: 400000 to 650000 Pa•s, and
even more preferable permanent elastic modulus: 450000 to 550000 Pa•s.

The expanded food of the present disclosure includes those having the physical properties as evaluated by the texture measurement described above. The expanded food of the present disclosure includes those having the physical properties as evaluated by the creep test described above. Further, the expanded food of the present disclosure may have both of these physical properties.

The expanded food of the present disclosure described above, which has the physical property values, as determined by the texture measurement, and/or the physical property values, as determined by the creep test, can be produced by subjecting a dough that contains a milk protein in a proportion of 75 mass% or more based on the total protein and that does not substantially contain a wheat-derived protein (a dough composition for expanded food; also referred to below simply as "the dough for expanded food" or "the dough of the present disclosure") to heat treatment. The expanded food encompassed by the present disclosure is not limited. From among the typical expanded food described above, the expanded food of the present invention is preferably a bakery product, and more preferably a food product similar to bread or a dried bread product.

A processed wheat product refers to an edible raw material prepared by processing wheat as a raw material. Examples of processed wheat products include wheat flour (soft flour, all-purpose flour, hard flour, and durum semolina) and wheat-derived proteins.

A "wheat-derived protein" refers to a protein derived from wheat and can include gliadin, glutenin, and gluten. Gluten is a protein having a mesh structure formed by kneading gliadin and glutenin contained in wheat in the presence of water.

The phrase "not substantially comprising or containing a wheat-derived protein" means that absolutely no wheat-derived protein is contained, or that even if it is contained, the content of wheat-derived gluten in 100 mass% of the expanded food is less than 1 mass%. The content of wheat-derived gluten is not limited, and is preferably less than 100 ppm (parts per million by mass, the same applies below), more preferably less than 20 ppm, and even more preferably less than 10 ppm. Even when the wheat-derived protein is partly changed as a result of processing for the processed wheat product, such a wheat-derived protein is regarded as a wheat-derived protein if it is detected as a wheat allergy source.

The dough of the present disclosure for use is not limited and may be preferably a dough that contains (a) a milk protein, (b) a starch, (c) a leavening agent, and (d) water as main ingredients, and that does not substantially contain a wheat-derived protein. The ingredients are described below. Below, the phrase "100 wet mass% of the dough of the present disclosure" means that the wet mass with the water content of the dough of the present disclosure is defined as 100%.

### (a) Milk Protein

In the present disclosure, "milk protein" means a protein derived from milk, in particular, cow's milk. "Milk" is typical mammary secretion obtained from milking animals and intended for consumption or processing directly in liquid form (Codex STAN 206-1999, "General Standard for Use of Dairy Terms"). Examples of milk include raw milk, cow's milk, certified milk, raw goat milk, pasteurized goat milk, raw sheep milk, homogenized milk, low-fat milk, fat-free milk, and processed milk (see Article 2 of the "Ministerial Ordinance on Milk and Milk products Concerning Compositional Standards etc." in the Food Sanitation Act (Ministry of Health, Labor and Welfare, Japan)). Preferred is milk milked from dairy cows.

Examples of proteins derived from milk mainly include casein and whey protein. These casein and whey protein may be derived from a milk-fermented product obtained by fermenting milk with microorganisms, such as lactic acid bacteria and bifidobacteria.

The milk protein for use as a raw material of the dough of the present disclosure may be casein or whey protein isolated or purified from milk, a milk-fermented product, etc., or may be an edible composition comprising casein and/or whey protein. Examples of such an edible composition include milk-fermented products, milk beverages, cow's milk, certified milk, homogenized milk, low-fat milk, fat-free milk, processed milk, cheese, cream, cream powder, butter, buttermilk powder, concentrated whey, protein concentrated whey powder, whey powder, concentrated milk, concentrated skimmed milk, condensed milk (unsweetened, sweetened, skimmed), whole milk powder, skimmed milk powder, sweetened milk powder, formulated milk powder, and other dairy products. These may be used singly or in any combination of two or more. Although not so limited, for example, a milk-fermented product or milk beverage may be combined with cheese, cream, concentrated whey, a protein concentrated whey powder, a skimmed milk powder, etc.

The "milk-fermented product" is a product obtained by fermenting an edible composition comprising a milk protein described above with microorganisms, such as lactic acid bacteria, bifidobacteria, and yeast. Examples include fermented milk and lactic acid bacteria beverage. The fermented milk is obtained by fermenting milk or milk etc. containing nonfat milk solids in an amount equivalent to or greater than that of milk with lactic acid bacteria or yeast, and then forming the resulting product into a paste or liquid, or a frozen product thereof, and has a nonfat milk solids content (components excluding fat and water) of 8.0% or more (see the "Ministerial Ordinance on Milk and Milk products Concerning Compositional Standards etc." in the Food Sanitation Act (Ministry of Health, Labor and Welfare, Japan)). The fermented milk includes yogurt. The lactic acid bacteria beverage is a beverage obtained by processing a product obtained by fermenting milk etc. with lactic acid bacteria or yeast, or a beverage containing a product obtained by fermenting milk etc. with lactic acid bacteria or yeast as the main raw material (excluding fermented milk) (see the Ministerial Ordinance mentioned above). The lactic acid bacteria beverage includes a dairy lactic acid bacteria beverage (which contains 3.0% or more of nonfat milk solids and has a lactic acid bacteria count or yeast count of 10 million/ml or more) and a lactic acid bacteria beverage (which contains less than 3.0% of nonfat milk solids and has a lactic acid bacteria count or yeast count of 1 million/ml or more). For fermented milk that has been sterilized based on a thermal history equivalent to 75°C for 15 minutes or more, the bacteria count above is optional.

The "milk beverage" refers to a processed beverage obtained by mixing a product containing milk or a dairy product as the main raw material with an ingredient other than milk (fruit juice, vitamins, sugars, coffee, minerals, etc.), and has a milk solids content of 3.0% or more (see the "Fair Competition Code Regarding the Labeling of Milk Beverage" (Japan)).

A protein derived from a milk-fermented product or from a milk beverage (the protein derived from a milk-fermented product may also be referred to below as a "milk-fermented product-derived protein") is preferably used as the milk protein. More preferred is a method of using a milk-fermented product, such as yogurt, or a milk beverage, singly or in combination with cheese, cream, butter, etc. mentioned above, as the edible composition comprising a milk protein.

The proportion of the milk protein in the dough of the present disclosure is 75 mass% or more based on the total protein content in the dough of the present disclosure. The proportion is preferably 77 mass% or more, more preferably 80 mass% or more, even more preferably 85 mass% or more, and particularly preferably 90 mass% or more. In a preferable embodiment, the proportion is preferably 93 mass% or more, more preferably 95 mass% or more, even more preferably 98 mass% or more, and particularly preferably 99 mass% or more, and the proportion may be less than 100 mass%. When the milk-fermented product-derived protein is contained in the milk protein, the proportion of the milk-fermented product-derived protein may be 9 mass% or more, preferably 10 mass% or more, more preferably 11 mass% or more, and even more preferably 12 mass% or more based on the total protein in the dough of the present disclosure.

The proportion of the total protein contained in 100 wet mass% of the dough of the present disclosure is 10 to 30 mass%, preferably 12.5 to 27.5 mass%, and more preferably 15 to 25 mass%.

The total protein content in the dough of the present disclosure can be measured by a protein measurement method (combustion method). This combustion method is an official method described in the appendix "Analysis Method etc. of Nutritional Ingredients etc." of the "Food Labeling Standards" (March 30, 2015, Consumption Table No. 139) stipulated by the Food Labeling Standards based on Article 4 (1) of the Food Labeling Act (Act No. 70 of 2013) established by the Japan Consumer Affairs Agency. Below, the "official method" means the analysis method described in the "Analysis Method etc. of Nutritional Ingredients etc." The total protein content in the dough of the present disclosure can be calculated based on the predetermined protein content in the protein-containing edible composition to be blended (see, for example, the Standard Tables of Food Composition in Japan).

### (b) Starch

The origin of the starch used as a raw material for the dough of the present disclosure is not particularly limited as long as the starch does not contain wheat-derived protein. Examples include starch derived from grain, non-grain plant seeds, vegetables containing starchy materials, or tree nuts. The "grain" includes rice (*uruchimai* (non-glutinous rice) and *mochigome* (glutinous rice)), wheat, barley, rye, oats, corn, waxy corn, *awa* (foxtail millet), *hie* (barnyard millet), *kibi* (proso millet), and adlay millet. Preferably, the grain is those other than gluten-containing grain such as wheat, barley, rye, and oats (gluten-free grain). The grain can also be those other than gluten-containing grain and rice. Examples of plant seeds include pulses, such as mung beans, soybeans, peas, and chickpeas, and pseudocereals such as buckwheat and amaranth. Examples of vegetables containing starchy materials include potatoes, such as potato, sweet potato, taro, cassava, and *konnyaku* potato, and root vegetables, such as bracken, *kudzu* (Pueraria *montana* var. *lobata*), and *katakuri* (*Erythronium japonicum).* Examples of tree nuts include chestnuts, acorns, and coconuts. The starch is preferably one derived from corn, waxy corn, potato, or tapioca, and more preferably one derived from waxy corn.

The starch for use as a raw material for the dough of the present disclosure may be natural starch isolated or refined from the plants described above or an edible composition containing natural starch (starch raw material). The starch raw material includes grain other than wheat (preferably grain other than gluten-containing grain (gluten-free grain), more preferably grain other than gluten-containing grain and rice), endosperms of such grain, or flour prepared by grinding such endosperms together with the attached germ and husk (grain flour other than wheat flour, preferably grain flour other than gluten-containing grain flour (gluten-free grain flour), more preferably grain flour other than gluten-containing grain flour and rice flour); plant seeds other than grain containing starchy materials (pulses and pseudocereals), endosperms of such plant seeds, or flour prepared by grinding such endosperms together with the attached germ and husk (seed flour); powder of vegetables containing starchy materials (potatoes or root vegetables) (vegetable flour); and powdered tree nuts. Wheat-derived starch may be added as long as the starch is a gluten-free material. However, it may not be added.

The starch used as a raw material for the dough of the present disclosure also includes processed starches (functional starches made by physically and/or chemically treating natural starch) as well as the natural starches described above. Examples of processed starches include the following starches prepared by processing starches (raw material) such as potato starch, corn starch, waxy corn starch, or tapioca starch: acetylated adipic acid crosslinked starch, acetylated phosphorylated crosslinked starch, acetylated oxidized starch, sodium starch octenylsuccinate, acetic starch, oxidized starch, hydroxypropyl starch, hydroxypropyl distarch phosphate,
phosphated distarch phosphate, monostarch phosphate, distarch phosphate, unmodified alpha starch, and modified alpha starch.

These starches may be used singly or in a combination of two or more. The starch is preferably, but is not limited to, corn starch, waxy corn starch, processed starch thereof, or a combination thereof.

The starch is present in a proportion of 2 to 25 mass%, preferably 5 to 20 mass%, and more preferably 10 to 15 mass% in 100 wet mass% of the dough of the present disclosure. The starch content in the dough of the present disclosure can also be calculated from the formula indicated in the label of the starch-containing edible composition to be added. The starch content in the dough of the present disclosure can also be calculated from the proportion of the remainder determined by subtracting the measured values of protein (combustion method), lipids (acid digestion), ash (ashing with magnesium acetate), dietary fiber (Prosky method), sugar (gas chromatography), and water (ambient pressure heat-drying) determined according to official methods from the measured value (wet mass) of the dough of the present disclosure.

Although not limited, the carbohydrate is present in a proportion of 2 to 30 mass%, preferably 5 to 26 mass%, and more preferably 10 to 20 mass% in 100 wet mass% of the dough of the present disclosure. The carbohydrate includes the starches described above, dietary fiber, and sugar. The proportion of the carbohydrate in the dough of the present disclosure (mass%) can be calculated from the proportion of the remainder determined by subtracting the measured values (mass) of protein (combustion method), lipids (acid digestion), ash (ashing with magnesium acetate), and water (ambient pressure heat-drying) determined according to official methods from the measured value (wet mass) of the dough of the present disclosure.

### (c) Leavening Agent

The leavening agent is a substance that has functionality of facilitating or assisting expansion of the dough of the present disclosure, which contains the raw materials described above and water, when the leavening agent is added to the dough. The leavening agent can be used to allow the dough of the present disclosure to expand. Such expansion includes expansion due to fermentation and expansion by heat treatment. The leavening agent includes, but is not limited to, yeast (e.g., fresh yeast, dry yeast, and instant dry yeast), *koji* mold (*Aspergillus oryzae*), baking powder, baking soda, and ispata. The leavening agent is preferably yeast or baking powder.

The proportion of the leavening agent in the dough of the present disclosure is not particularly limited as long as the effects described above are brought about. To expand the dough of the present disclosure, although not limited, the leavening agent content may be 0.05 to 5 mass%, preferably 0.25 to 2.5 mass%, and more preferably 0.5 to 1.5 mass% in 100 wet mass% of the dough.

### (d) Water

The water content in the dough of the present disclosure is not particularly limited as long as the effects of the present disclosure are brought about. Although not limited, the water content in 100 wet mass% of the dough of the present disclosure is 30 to 70 mass%, preferably 40 to 60 mass%, and more preferably 45 to 55 mass%. The water content in the dough of the present disclosure can be measured according to ambient pressure heat-drying in accordance with an official method. The water for use in the production of the dough of the present disclosure is not particularly limited as long as the water is for use in food production. Any beverage or liquid containing water, such as tea drinks, fruit juice drinks, coffee drinks, nutritional drinks, and soft drinks, may be used, as long as the beverage or liquid does not interfere with the effects of the present invention and contains water.

### (e) Thickener

The dough of the present disclosure may optionally contain a thickener in addition to the ingredients described above. Adding a thickener makes the texture of the produced expanded food more fluffy and elastic.
The thickener includes, but is not limited to, polysaccharide thickeners (e.g., guar gum, xanthan gum, tamarind seed gum, carrageenan, agar, pectin, gum arabic, pullulan, soy polysaccharides, gellan gum, welan gum, locust bean gum, sodium alginate, arabinoxylan, curdlan, gum karaya, glucomannan, psyllium seed gum, gelatin, tara gum, hydroxymethyl cellulose, hydroxypropyl cellulose, and carboxymethyl cellulose); plant-derived ingredients such as *yamatoimo* (Japanese yam); and cheese such as natural cheese (e.g., cream cheese, mozzarella cheese, and cottage cheese) and processed cheese. These may be used singly or in a combination of two or more.

The proportion of the thickener in the dough of the present disclosure is not particularly limited as long as the effects are brought about. Although not limited, the thickener is present in a proportion of 0 to 30 mass%, preferably 0.5 to 20 mass%, and more preferably 1 to 15 mass% based on the wet mass of the dough of the present disclosure taken as 100 mass%.

### (f) Other Ingredients

The dough of the present disclosure may be composed of only the milk protein, starch, leavening agent, and water described above, or of only the milk protein, starch, leavening agent, water, and thickener described above. The dough of the present disclosure may contain ingredients as desired in addition to the ingredients above, as long as the ingredients do not substantially contain a wheat-derived protein and do not interfere with the effects of the present invention.

Examples of such ingredients include dough starters (e.g., home-grown dough starter, ready-made dough starter, sake starter, levain starter, panettone starter, yogurt starter, and sourdough starter), yeast food (e.g., inorganic , organic, or enzyme-based dough improvers or bread improvers), fats and oils (e.g., shortening, lard, margarine, butter, liquid oil, and powdered oil), sugar (e.g., trehalose, glucose, fructose, lactose, sucrose, maltose, and isomaltose), sugar alcohol (e.g., sorbitol, maltitol, palatinit, and reduced syrup), emulsifiers (e.g., lecithin, sucrose fatty acid esters, and glycerol fatty acid esters), enzymes, seasonings (e.g., salt, amino acids, and nucleic acids), preservatives, proteins other than milk protein, amino acids (e.g., glycine, and glutamic acid), and flavoring agents. Eggs or egg products may also be used as a sub-ingredient, but may not be used. These ingredients may be added singly or in a combination of two or more. If these ingredients are added, the proportion of the ingredients in 100 wet mass% of the dough of the present disclosure may be 0.1 to 55 mass%.

It is also preferred that the dough of the present disclosure and the expanded food produced from the dough do not substantially contain a wheat-derived protein, but also does not substantially contain a processed rice product. The processed rice product refers to an edible raw material prepared by processing rice (*uruchimai* (non-glutinous rice) and *mochigome* (glutinous rice)) as a raw material. Examples include rice flour, rice starch, and rice protein. The phrase "does not substantially contain a processed rice product" means that a processed rice product is not contained at all, or that the total content of the processed rice product in 100 wet mass% of the dough of the present disclosure is less than 0.1 mass% even if the processed rice product is contained.

The dough of the present disclosure is used as dough for producing the expanded food of the present disclosure. The method for producing an expanded food of the present disclosure by using the dough of the present disclosure includes, for example, mixing the aforementioned ingredients such as the milk protein, starch, leavening agent, and water described above (or the milk protein, starch, leavening agent, water, and thickener described above), optionally with the ingredients to prepare dough, and subjecting the dough to a primary fermentation step, a shaping step, a dividing step, a secondary fermentation step, and a heat treatment step according to a common bread-making method. Additionally, a known bread-making method may be used instead of (or in addition to) a common bread-making method. For example, the bread-making methods such as a quick-forming method, a straight dough method, a preferment method (*nakadane* method), a poolish method (*ekidane* method), a sourdough method, a *sakatane*

(Japanese s*ake*) dough method, a hop dough method, a *chumen* method, a Chorleywood method, a continuous bread-making method, an overnight method, and a remix method can be selected and used as appropriate. These methods may optionally be used in combination of two, or three or more.

The heat treatment step is performed by baking, steaming, baking and steaming, or deep-frying, depending on the type of the expanded food to be produced. The heat treatment step is preferably the baking step used for making bakery products, and more preferably the baking step used for making bread.
For each operation and its conditions, the operation and conditions used in usual bread-making steps are used. However, because the dough of the present disclosure *does not substantially contain* gluten, it is sufficient if the raw materials are stirred and mixed in the dough-making process, and the kneading step can be omitted. In normal bread-making, dough is divided and then allowed to rest for 15 to 20 minutes (a bench or an intermediate roasting furnace) before shaping in order to allow the dough to rest after it becomes difficult to stretch due to the elasticity of gluten. However, using the dough of the present disclosure eliminates the need for this step because the dough contains substantially no gluten. Thus, the dough of the present disclosure can be used to produce a bread-like expanded food with a pore structure (*sudachi*) and a support matrix structure similar to those of bread, as well as unique properties and texture different from those of bread in a shorter time than it normally takes to produce regular bread.

It is preferred that the expanded food of the present disclosure does not substantially contain a wheat-derived protein, but also does not substantially contain processed products of barley, rye, and/or oats (cereal flour and starch), which are gluten-containing grain just like wheat, and proteins derived from such gluten-containing grain. Under regulations of The European Commission (No. 828/2014, published on July 30, 2014), a food for sale to the final consumers (final food) with a gluten content of less than 100 mg/kg (less than 100 ppm) can be labeled a "very-low-gluten food," and a food with a gluten content of less than 20 mg/kg (less than 20 ppm) can be labeled a "gluten-free food." Under regulations of the U.S. Food and Drug Administration (FDA), an ingredient that is a gluten-containing grain (e.g., spelt wheat), an ingredient derived from a gluten-containing grain that has not been processed to remove gluten (e.g., wheat flour), and an ingredient derived from a gluten-containing grain that has been processed to remove gluten, but results in the final food containing gluten in an amount of less than 20 ppm (e.g., wheat starch), may be labeled a "gluten-free food." Thus, it is preferred to adjust the content of a processed gluten-containing grain product and the content of the protein derived from the processed gluten-containing grain product such that the gluten content (equivalent to the gluten content in 100 mass% of the solid content of the dough of the present disclosure) in the expanded food of the present disclosure is preferably less than 100 ppm, more preferably less than 20 ppm, and still more preferably 10 ppm or less. The gluten content in the expanded food of the present disclosure can be determined by ELISA using an assay kit, such as RIDASCREEN Gliadin (R-Biopharm AG), for example.

The following are examples of the protein content, the carbohydrate content, and the lipid content in the expanded food of the present disclosure:
Protein content: 10 to 30 or 10 to 31 mass%, preferably 12.8 to 28.4 mass%, more preferably 15 to 26 mass%,
Carbohydrate content: 5 to 30 or 5 to 31 mass%, preferably 7 to 27 mass%, more preferably 10 to 21 mass%,
Lipid content: 0.1 to 20 mass%, preferably 0.5 to 15 mass%, more preferably 1 to 12 mass%.

In the present specification, the terms "comprising," "containing," and "including" include the meanings of "consisting of" and "consisting essentially of."

### Examples

The present invention will be described below with reference to the following Examples and Experimental Examples in order to aid in understanding the structure and effects of the invention. However, the invention is not limited in any way by these Examples. The following experiments were conducted at room temperature (25 ± 5°C) under atmospheric pressure unless otherwise noted. Unless otherwise noted, "%" and "parts" stated below respectively mean "mass%" and "parts by mass."

The raw materials used in the following experiments are as follows.
Fermented milk for raw material: Prepared by mixing 15.71 g of skimmed milk powder (manufactured by Meiji Co., Ltd.), 3.0 g of yogurt (Meiji Probio Yogurt R-1 Plain: manufactured by Meiji Co., Ltd.), and 81.29 g of water. The fat content was 0.2%, and the protein content was 5.4% in the total amount (100%).
Milk beverage for raw material: Prepared by mixing 13.9 g of skimmed milk powder (manufactured by Meiji Co., Ltd.), 13.53 g of dairy cream (manufactured by Meiji Co., Ltd.), and 72.57 g of water. The fat content was 7%, and the protein content was 7.2% in the total amount (100%).
Unsalted butter: Meiji Hokkaido Butter (no salt added) (manufactured by Meiji Co., Ltd.). The fat content was 82.6%, and the protein content was 0.5% in the total amount (100%).
Sugar: Nitten HA (manufactured by Nippon Beet Sugar Manufacturing Co., Ltd.
Milk protein concentrate: trade name: YO-8236 (manufactured by Arla Foods Ingredients). The fat content was 5% fat, and the protein content was 82% in the total amount (100%).
Micellar casein: Trade name MCC85 (Premium) (manufactured by Sachsenmilch). The fat content was 1.5%, and the protein content was 81.1% in the total amount (100%).
Whey Protein Isolate (WPI): WPI895 (manufactured by Fonterra). The fat content was 0.1%, and the protein content was 91.9% in the total amount (100%).
Starch: Waxy Starch Y (manufactured by Nihon Shokuhin Kako Co. Ltd.)
Processed starch: Waxy Alpha S-1 (manufactured by Sanwa Starch Co., Ltd.).
Powdered soybean protein: SP6000H (manufactured by The Nisshin OilliO Group, Ltd., Inc.).
Rice flour: Riz Farine (manufactured by Gunma Rice Flour Milling Co. Ltd.)
Bakery yeast: Saf-instant dry yeast (manufactured by Lesaffre)

### Experimental Example 1: Dough Composition for Expanded Food and Production of Expanded Food

Bread-like foods were made as expanded foods according to the formulas and production steps listed in Tables 2-1 and 2-2 (Examples 1 to 3 and 5 to 10). Bread was also made according to the formulas and production steps listed in Table 3 (Comparative Examples 1 to 3). Each step was performed according to the standard bread-making method. The mixing step (kneading step) was performed at 25°C.

**Table 2-1**

| Formula of Bread-like Food (Gluten-free) | | | | | | (Mass%) |
|---|---|---|---|---|---|---|
| | Example 1 | Example 2 | Example 3 | Example 5 | Example 6 | Example 7 |
| Fermented Milk for Raw Material | 49.80 | | 55.80 | 5580 | | 55.80 |
| Milk Beverage for Raw Material | | 45.80 | | | | |
| Cream Cheese | 15.00 | 15.00 | | | | |
| Unsalted Butter | | 400 | 9.00 | 9.00 | | 9.00 |
| Sugar | 5.00 | 5.00 | 5.00 | 5.00 | 5.00 | 5.00 |
| Salt | 0.50 | 0.50 | 0.50 | 0.50 | 0.50 | 0.50 |
| Milk Protein Concentrate | 600 | 600 | 19.00 | 6.00 | 6.00 | 3.00 |
| Micellar Casein | 13.00 | 13.00 | | 13.00 | 13.00 | 13.00 |
| WPI | | | | | | 3.00 |
| Starch | 10.00 | 10.00 | 10.00 | | 10.00 | 10.00 |
| Processed Starch | | | | 10.00 | | |
| Bakery Yeast | 0.70 | 0.70 | 0.70 | 0.70 | 0.70 | 0.70 |
| Ingredient water | | | | | 64.8 | |
| Total Amount | 100.000 | 100.000 | 100.000 | 100.000 | 100.000 | 100.000 |
| Wheat-derived Protein Content | 0.00 | 0.00 | 0.00 | 0.00 | 0.00 | 0.00 |
| Milk Protein Content (Protein Content Derived from Fermented Milk) | 19166 (2.667) | 20.269 (0) | 18.497 (2989) | 18.497 (2989) | 20.347 (0) | 18.794 (2989) |
| Carbohydrate Content | 18800 | 20.548 | 19.305 | 19.225 | 17.493 | 19.191 |
| Lipid Content | 8.831 | 8.941 | 8.027 | 8.087 | 0.668 | 7.880 |
| Ash Content | 2.411 | 2.676 | 2.410 | 2.400 | 2.038 | 2.389 |
| Water Content | 50.792 | 47.566 | 51.761 | 51.791 | 59.454 | 51.746 |
| Total Amount | 100.000 | 100.000 | 100.000 | 100.000 | 100.000 | 100.000 |
| Percentage of Milk Protein in Total Protein Content (%) | 99.948 | 99.951 | 99.946 | 99.946 | 99.936 | 99.947 |
| Percentage of Protein Derived from Fermented Milk in Total Protein Content (%) | 13.909 | 0.000 | 16.149 | 16.149 | 0.000 | 15.894 |

| Making Process | | | | | | |
|---|---|---|---|---|---|---|
| Mixing (Using Mixer) | (1) Mixing powdery raw materials with fermented milk for raw material | (1) Mixing powdery raw materials with milk beverege for raw material , | (1) Mixing powdery raw materials with fermented milk for raw material | (1) Mixing powdery raw materials with fermented milk for raw material | (1) Mixing powdery raw materials with water | (1) Mixing powdery raw materials with fermented milk for raw material |
| | → Mixing for 2 minutes | → Mixing for 2 minutes Adding | → Mixing for 2 minutes | → Mixing for 2 minutes | → Mixing for 2 minutes Adding | → Mixing for 2 minutes |
| | (2) Adding cream cheese | (2) unsalted butter and cream cheese | (2) Adding unsalted butter | (2) Adding unsalted butter | (2) cream cheese for 1 | (2) Adding unsalted butter |
| | → Mixing for 1 minute | → Mixing for 1 minute | → Mixing for 1 minute | → Mixing for 1 minute | → Mixing minute | → Mixing for 1 minute |
| Primary Fermentation | 5°C, 75%, 16 hr | 5°C, 75%, 16 hr | 5°C, 75%, 16 hr | 5°C, 75%, 16 hr | 5°C, 75%, 16 hr | 5°C, 75%, 16 hr |
| Division | About 70 g × 2 | About 70 g × 2 | About 70 g × 2 | About 70 g × 2 | About 70 g × 2 | About 70 g × 2 |
| Bench Time | Not Performed | Not Performed | Not Performed | Not Performed | Not Performed | Not Performed |
| Shaping * | Round (Diameter: 5 cm) | Round (Diameter: 5 cm) | Round (Diameter: 5 cm) | Round (Diameter: 5 cm) | Round (Diameter: 5 cm) | Round (Diameter: 5 cm) |
| Final Proof | 40°C, 85%, 60 Minutes | 40°C, 85%, 60 Minutes | 40°C, 85%, 60 Minutes | 40°C, 85%, 60 Minutes | 40°C, 85%, 60 Minutes | 40°C, 85%, 60 Minutes |
| Baking (Top Heat/Bottom Heat, Time) | 160°C/160°C, 25 Minutes | 160°C/160°C, 25 Minutes | 160°C/160°C, 25 Minutes | 160°C/160°C, 25 Minutes | 160°C/160°C, 25 Minutes | 160°C/160°C, 25 Minutes |

| | | | | | | |
|---|---|---|---|---|---|---|
| *Two pieces of dough formed into a round shape were placed in a bread-baking container (5 cm long × 10 cm wide × 5 cm high), fermented to rise, and baked. | | | | | | |

**Table 2-2**

| **Formula of Bread-like Food (Gluten-free)** | | | **(Mass%)** |
|---|---|---|---|
| | **Example 8** | **Example 9** | **Example 10** |
| **Fermented Milk for Raw Material** | | | **44.51** |
| **Milk Beverage for Raw Material** | **49.90** | **50.35** | |
| Cream Cheese | 15.00 | 15.00 | |
| Unsalted Butter | | | 7.80 |
| Sugar | 5.00 | 5.00 | 5.00 |
| Salt | 0.50 | 0.50 | 0.79 |
| Milk Protein Concentrate | 5.00 | 4.30 | 19.76 |
| Micellar Casein | 12.00 | 9.65 | |
| WPI | | | |
| Starch | 10.00 | 10.00 | |
| Processed Starch | | | |
| Bakery Yeast | 0.70 | 0.70 | 0.40 |
| Rice Flour | | | 19.76 |
| Powdered Soy Protein | 1.90 | 4.50 | |
| Cow Milk | | | 1.98 |
| **Ingredient water** | | **0.00** | **0.00** |
| **Total Amount** | **100.000** | **100.000** | **100.000** |
| **Wheat-derived Protein Content** | **0.00** | **0.00** | **0.00** |
| **Milk Protein Content (Protein Content Derived from Fermented Milk)** | **17.54 (0)** | **15.08 (0)** | **18.2 (2.38)** |
| **Carbohydrate Content** | **18.75** | **18.65** | **25.11** |
| **Lipid Content** | **8.63** | **8.60** | **10.36** |
| **Ash Content** | **3.10** | **3.40** | **2.49** |
| **Water Content** | **51.98** | **54.28** | **43.84** |
| **Total Amount** | **100.00** | **100.00** | **100.00** |
| **Percentage of Milk Protein in Total Protein Content (%)** | **90.76** | **78.15** | **93.57** |
| **Percentage of Protein Derived from Fermented Milk in Total Protein Content (%)** | **0.00** | **0.00** | **12.26** |

| **Making Process** | | | |
|---|---|---|---|
| **Mixing (Using Mixer)** | **(1) Mixing powdery raw materials with milk beverage for raw material** | **(1) Mixing powdery raw materials with milk beverage for raw material** | **(1) Mixing powdery raw materials with fermented milk for raw material** |
| | **→ Mixing for 2 minutes** | **→ Mixing for 2 minutes** | **→ Mixing for 2 minutes** |
| | **(2) Adding Cream Cheese →Mixing for 1 minute** | **(2) Adding Cream Cheese →Mixing for 1 minute** | **(2) Adding unsalted butter →Mixing for 1 minute** |
| Primary Fermentation | 5°C, 75%, 16 hr | 5°C, 75%, 16 hr | 30°C, 2 hr |
| Division | About 70g × 2 | About 70g × 2 | About 70 g × 2 |
| Bench Time | Not Performed | Not Performed | Not Performed |
| Shaping * | Round (Diameter: 5 cm) | Round (Diameter: 5 cm) | Round (Diameter: 5 cm) |
| Final Proof | 40°C, 85%, 60 Minutes | 40°C, 85%, 60 Minutes | 40°C, 85%, 60 Minutes |
| **Baking (Top Heat/Bottom Heat, Time)** | **160°C/160°C, 25 Minutes** | **160°C/160°C, 25 Minutes** | **160°C/160°C, 17 Minutes** |

| | | | |
|---|---|---|---|
| ***Examples 8-10: Two pieces of dough formed into a round shape were placed in a bread-baking container (5 cm long × 10 cm wide × 5 cm high), fermented to rise, and baked.** | | | |

**Table 3**

| **Formula of Bread (Wheat Added)** | | | **(Mass%)** |
|---|---|---|---|
| | **Comparative Example 1** | **Comparative Example 2** | **Comparative Example 3** |
| **Hard Flour (Grade 1)** | **48.30** | **48.30** | **48.30** |
| **Fermented Milk for Raw Material** | **0.00** | **15.00** | 30.00 |
| Unsalted Butter | 10.90 | 10.90 | 10.90 |
| Sugar | 4.90 | 4.90 | 4.90 |
| Salt | 0.40 | 0.40 | 0.40 |
| Bakery Yeast | 0.70 | 0.70 | 0.70 |
| **Ingredient water** | **34.80** | **19.80** | **4.80** |
| **Total Amount** | **100.000** | **100.000** | **100.000** |
| **Wheat-derived Protein Content** | **5.70** | **5.70** | **5.70** |
| **Milk Protein Content** | **0.05** | **0.58** | **1.10** |
| **Carbohydrate Content** | **39.93** | **40.72** | **41.51** |
| **Lipid Content** | **9.03** | **9.04** | **9.06** |
| **Ash Content** | **1.17** | **1.29** | **1.41** |
| **Water Content** | **44.12** | **42.68** | **41.23** |
| **Total Amount** | **100.00** | **100.00** | **100.00** |
| **Percentage of Milk Protein in Total Protein Content (%)** | **0.82** | **8.72** | **15.46** |

| **Making Process** | | | |
|---|---|---|---|
| **Mixing (Using Mixer)** | **(1) Mixing powdery raw materials with water** | **(1) Mixing powdery raw materials with water** | **(1) Mixing powdery raw materials with water** |
| | **→ Mixing for 10 minutes (kneaded until gluten forms)** | **→ Mixing for 10 minutes (kneaded until gluten forms)** | **→ Mixing for 10 minutes (kneaded until gluten forms)** |
| | **(2) Adding unsalted butter** | **(2) Adding unsalted butter** | **(2) Adding unsalted butter** |
| | **→ Mixing for 6 minutes (kneaded until butter is mixed)** | **→ Mixing for 6 minutes (kneaded until butter is mixed)** | **→ Mixing for 6 minutes (kneaded until butter is mixed)** |
| Primary Fermentation | 5°C, 75%, 16 hr | 5°C, 75%, 16 hr | 5°C, 75%, 16 hr |
| Bench Time | 20 Minutes | 20 Minutes | 20 Minutes |
| Division | About 50 9 × 2 | About 50 g × 2 | About 50 g × 2 |
| Shaping | Round (Diameter: 5 cm) | Round (Diameter: 5 cm) | Round (Diameter: 5 cm) |
| Final Proof | 40°C, 85%, 60 Minutes | 40°C, 85%, 60 Minutes | 40°C, 85%, 60 Minutes |
| **Baking (Top Heat/Bottom Heat, Time)** | **190°C/190°C, 35** 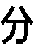 | **190°C/190°C, 35 Minutes** | **190°C/190°C, 35 Minutes** |

| | | | |
|---|---|---|---|
| ***Two pieces of dough formed into a round shape were placed in a bread-baking container (5 cm long × 10 cm wide × 5 cm high), fermented to rise, and baked.** | | | |

The results indicate that the expanded foods (bread-like food) in Examples 1 to 3 and 5 to 10, just like the bread in Comparative Examples 1 to 3, all had a network formed of baked proteins, carbohydrates, etc. (mesh-like solid region), thus having a pore structure similar to that of bread called *"sudachi"* (support matrix formation).

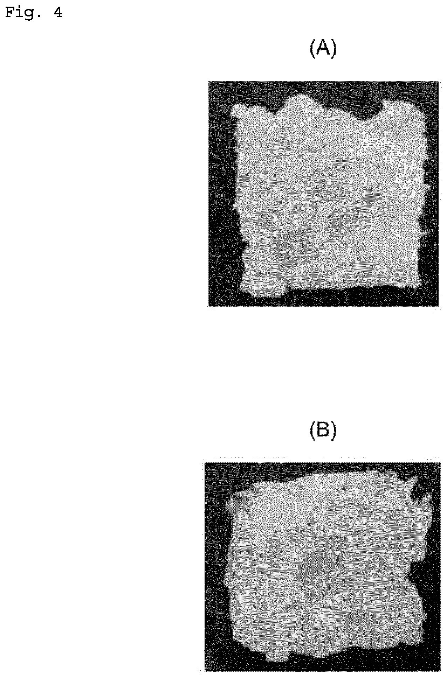

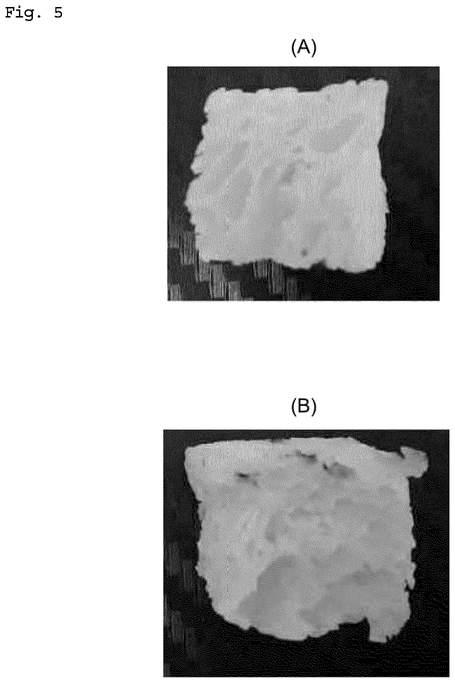

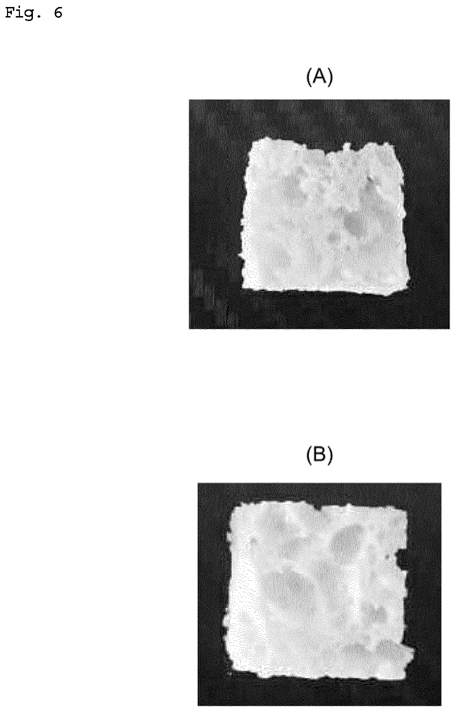

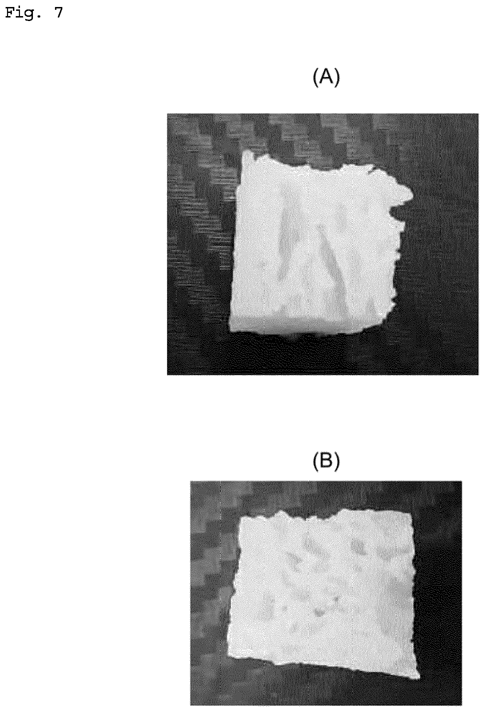

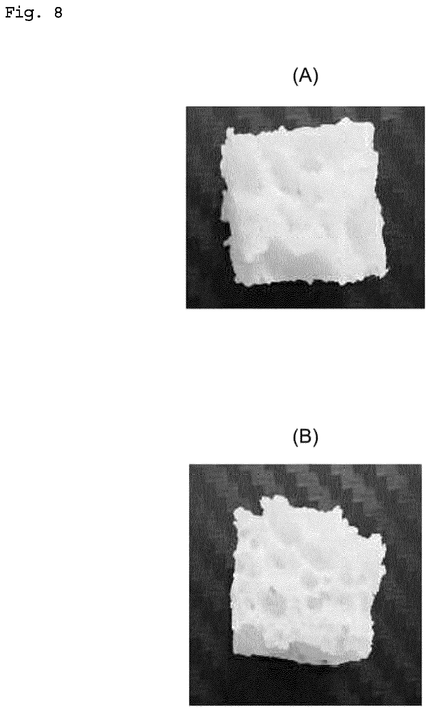

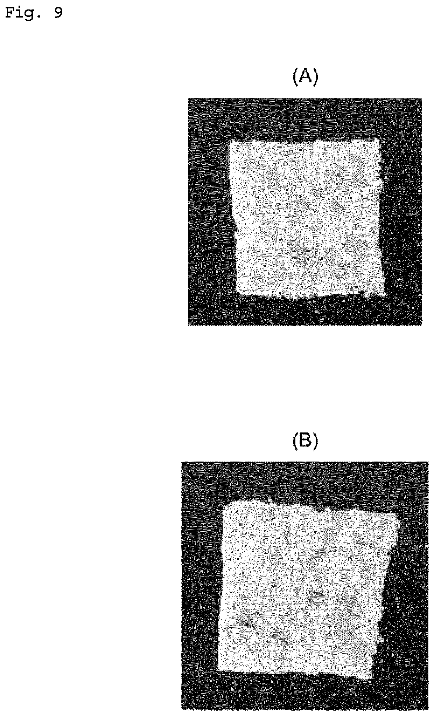

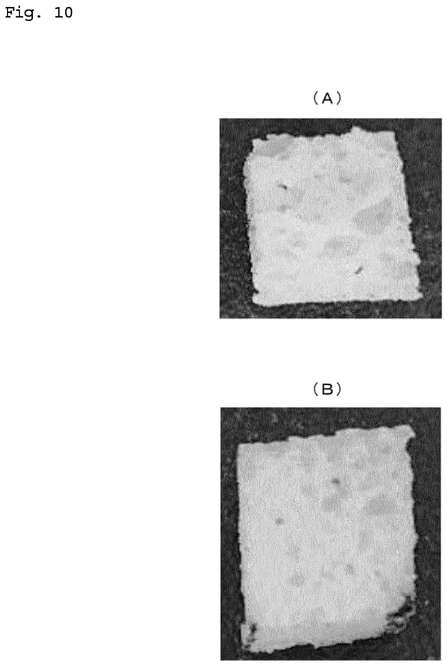

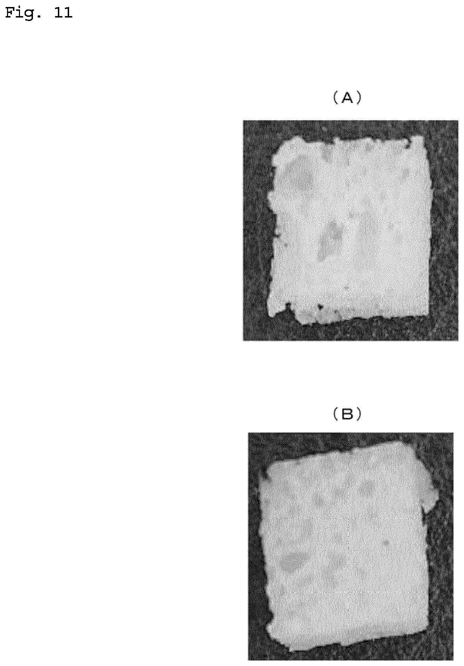

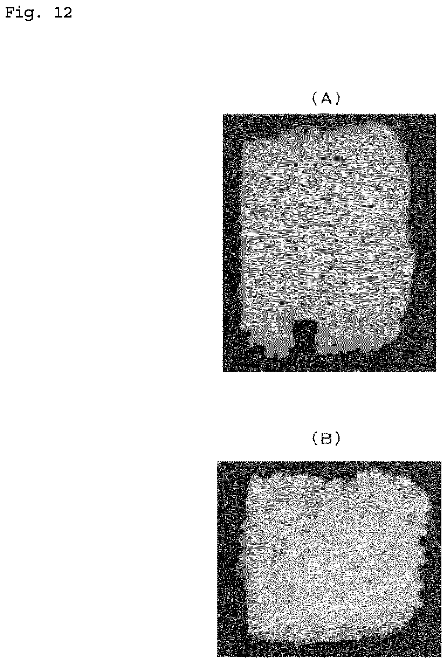

Figs. 4 to 12 show images of the internal cross-section ((a) eating side, and (b) vertical side) of the bread-like foods of Examples 1 to 3 and 5 to 10. The eating side is the surface at which *shokupan* [Japanese soft white bread baked in a square pan] is actually bitten (the surface against which teeth hit), and the vertical side is the surface in the direction perpendicular to the eating side (see Fig. 2(1)). A cube of 2 cm per side was cut out from the center of each expanded food, including the center portion as a test specimen (see Fig. 2(2)).

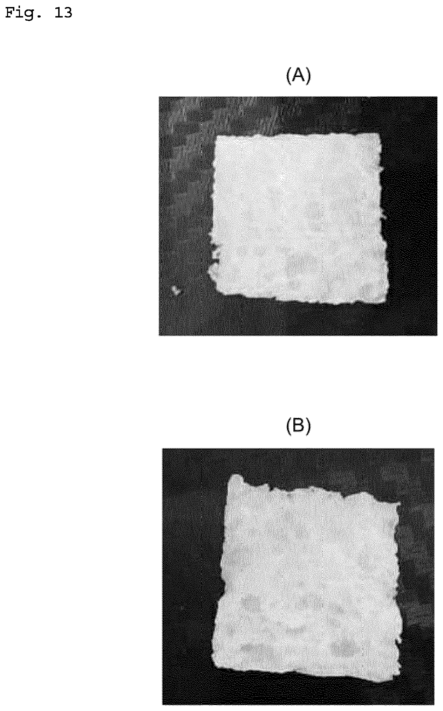

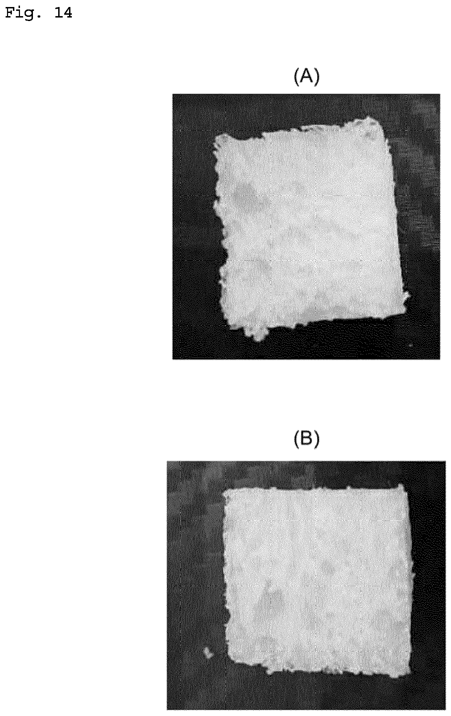

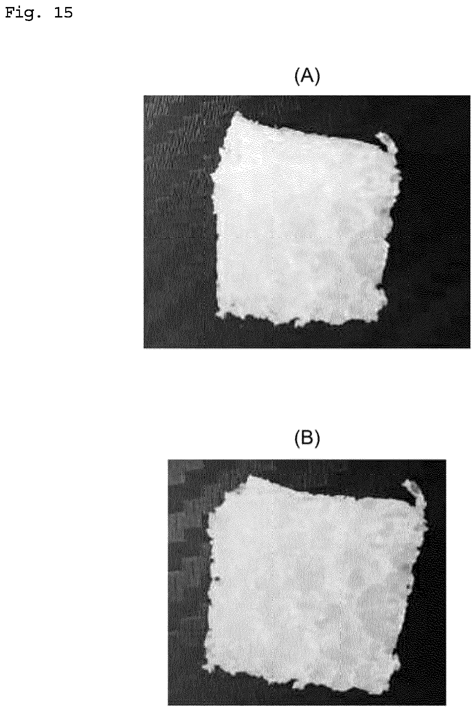

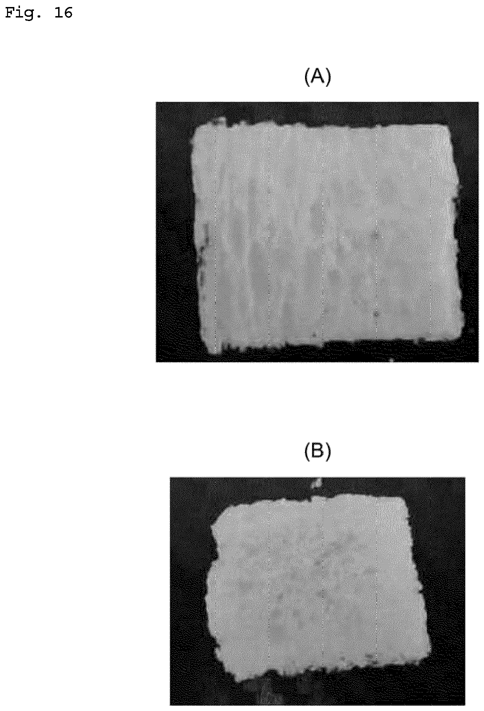

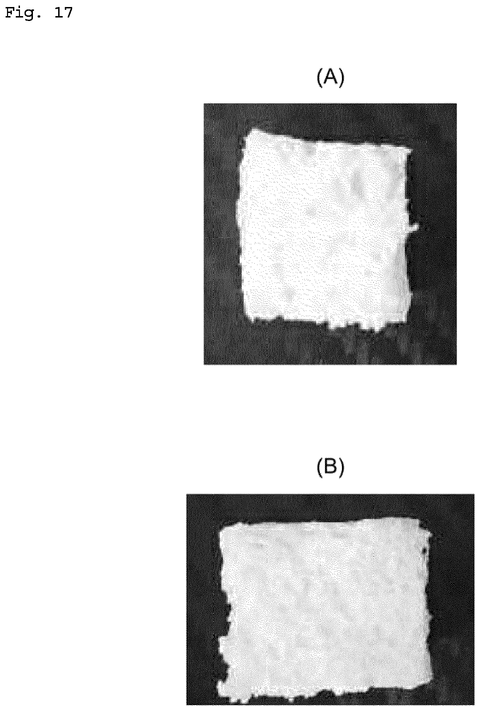

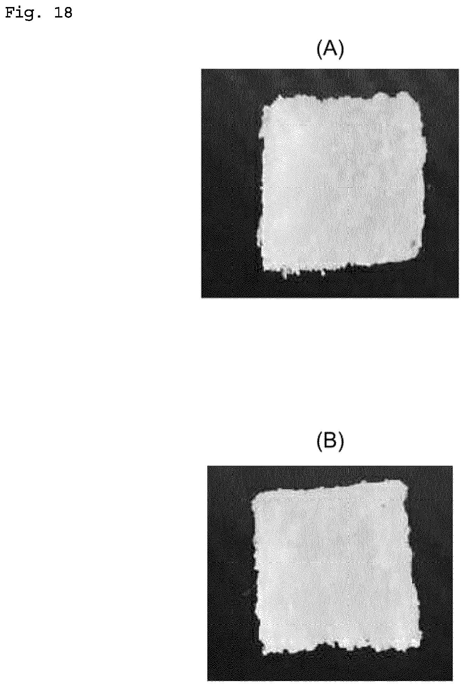

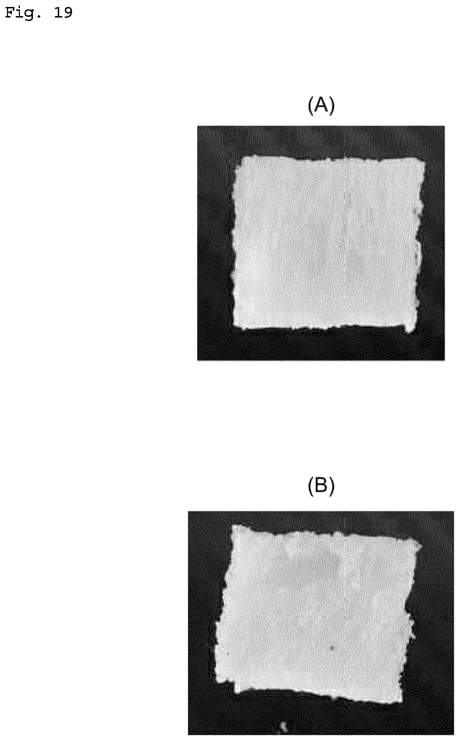

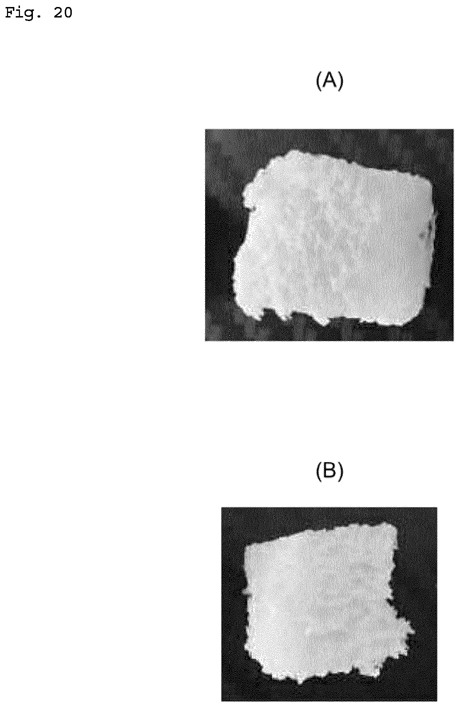

Figs. 13 to 15 show images of the internal cross-section of the bread of Comparative Examples 1 to 3 ((A) eating side, and (B) vertical side), and Figs. 16 to 20 show images of the internal cross-section of commercially available bread (*shokupan*) A to E (Comparative Examples 4 to 8) made mostly of wheat flour ((A) eating side, and (B) vertical side) (six-slice bread, 2-cm thick). Table 4 shows the nutrient content and ingredients label of commercially available bread A to E.

**Table 4 Commercially Available Bread (Shok upan)**

| | | **Comparative Example 4** | **Comparative Example 5** | **Comparative Example 6** | **Comparative Example 7** | **Comparative Example 8** |
|---|---|---|---|---|---|---|
| | | **Commercially Available Bread A** | **Commercially Available Bread B** | **Commercially Available Bread C** | **Commercially Available Bread D** | **Commercially Available Bread E** |
| **Percentage of Nutritional Ingredient in 100 g of Bread** | **Calorie (kcal)** | **266** | **278** | **264** | **258** | **254** |
| | Protein (g) | 7.9 | 8.3 | 9.2 | 8.8 | 8.9 |
| | Lipid (g) | 4.2 | 4.8 | 5.4 | 2.9 | 3.9 |
| | Carbohydrate (g) | 49.1 | 51.8 | 44.6 | 49.1 | 45.9 |
| | **Salt-equivalent Amount (g)** | **1.1** | **1.1** | **1.2** | **1.3** | **1.1** |
| **Carbohydrate Content (%) in Bread Dough before Baking (100 Mass%)*** | | **47.9** | **50.5** | **43.4** | **47.9** | **44.8** |
| **Ingredients Label** | | **Wheat (Milled in Japan), Sugar, Margarine Containing Butter, Bakery Yeast, Salt, Rice Flour, Fermented Vinegar (Containing some wheat and milk Ingredients)** | **Wheat (Milled in Japan), Sugar, Cream (Dairy Product), Butter, Dough Starter, Bakery Yeast, Skimmed Milk Powder, Salt (Containing some milk Ingredients, wheat, and soybeans)** | **Wheat (Milled In Japan), Sugars, Shortening, Bakery Yeast, Margarine, Egg, Skimmed Milk Powder, Salt, Natural Cheese, Cow Milk, Dough Starter, Vegetable Fat and Oil, Whey Mineral/Emulsifer, Yeast Food, Flavoring Agent, V.C (Containing some milk Ingredients, egg, wheat, and soybeans)** | **Wheat, Sugar, Margarine Containing Butter, Skimmed Milk Powder, Salt, Shortening, Bakery Yeast, Fermentation Flavoring Agent/Vitamin C (Containing some milk Ingredients and wheat)** | **Wheat, Sugars, Margarine, Butter, Bakery Yeast, Salt, Dough Starter, Skimmed Milk Powder/Emulsifier, Yeast Food, V.C (Containing some milk Ingredients, wheat, and soybeans)** |

| | | | | | | |
|---|---|---|---|---|---|---|
| ***The moisture lost from dough during baking Is 2 to 3 mass%. Thus, calculation Is based on the assumption that the moisture content In dough before baking is the moisture content of bread plus 2.5 mass%.** | | | | | | |

As shown in Figs. 4 to 20, the pore structure of the bread-like foods in Examples 1 to 3 and 5 to 10 was clearly different from the pore structure of the wheat bread in Comparative Examples 1 to 8, specifically in terms of the size and shape of the pore structure. In the pore structure of the bread-like foods in Examples 1 to 10, each air bubble was large, and there was no clear trend of extension in the vertical direction in the eating side. However, in the pore structure of the wheat bread in Comparative Examples 1 to 8, each air bubble was small, and the tendency of extension in the vertical direction in the eating side was clear, with multiple vertically elongated air bubbles present.

### Experimental Example 2: Evaluation of Physical Properties of Expanded Food

The internal properties of the bread-like foods (Examples 1 to 3 and 5 to 10) and bread (Comparative Examples 1 to 3) produced in Experimental Example 1, and the internal properties of commercially available bread A to E (Comparative Examples 4 to 8) listed in Table 4 were evaluated by performing a texture measurement and a creep test with a creep meter (rheological measurement device) (Rheoner II: model number RE-3305S, parallel-plate type, manufactured by Yamaden Co., Ltd.)

### (1) Preparation Method for Test Specimen

The bread-like foods (Examples 1 to 3 and 5 to 10) and bread (Comparative Examples 1 to 3) produced in Experimental Example 1 were cooled to room temperature after production and stored in a plastic bag at 25°C for one day. Thereafter, a test specimen for measurement (a cube of 2 cm × 2 cm × 2 cm) was cut out from the internal center portion of each bread-like food. For commercially available bread A to E (Comparative Examples 4 to 8), six slices of bread (2-cm thick) were purchased 3 days before the expiration date (4 to 5 days including the day of manufacture), and a test specimen for measurement (a cube of 2 cm × 2 cm × 2 cm) was cut from the internal center portion of the bread. After cut-out, each specimen was kept in a sealed container filled with dry silica gel (40% RH or below) for 30 minutes to ensure that each specimen had the same moisture content.

### (2) Texture Measurement Conditions

- Mode: Texture measurement mode
- Plunger: Disk-shaped (diameter: 3 cm, thickness: 8 mm) Area that comes in contact with a test specimen: 4 cm²
- Compression speed: 1 mm/sec
- Compression distance: 10 mm

The plunger was placed on the eating side of a test specimen for measurement (thickness: 2 cm), and a load was applied to the specimen under the conditions above. The compression curve was recorded and analyzed by using an automatic analyzer (CA-3305: Yamaden Co., Ltd.) to determine the hardness and cohesiveness. Four samples (n=4) were used for each test specimen for measurement, and the average value was taken as the result.

### (3) Creep Test Conditions

- Mode: Creep measurement mode
- Load: 0.2 N
- Plunger: Disk-shaped (diameter: 3 cm, thickness: 8 mm) Area that comes in contact with a test specimen: 4 cm²
- Load retention time: 1 minute
- Unloading time: 1 minute

The plunger was placed on the eating side of a test specimen for measurement (thickness: 2 cm), and measurement was performed under the conditions above. The creep curve was recorded and analyzed by using an automatic analyzer (CA-3305:
Yamaden Co., Ltd.) to determine the elastic modulus (instantaneous elastic modulus and delayed elastic modulus) and
viscosity (delayed viscosity and permanent viscosity). Four samples (n=4) were used for each test specimen for measurement, and the average value was taken as the result.

### (4) Test Results

### (a) Texture Measurement

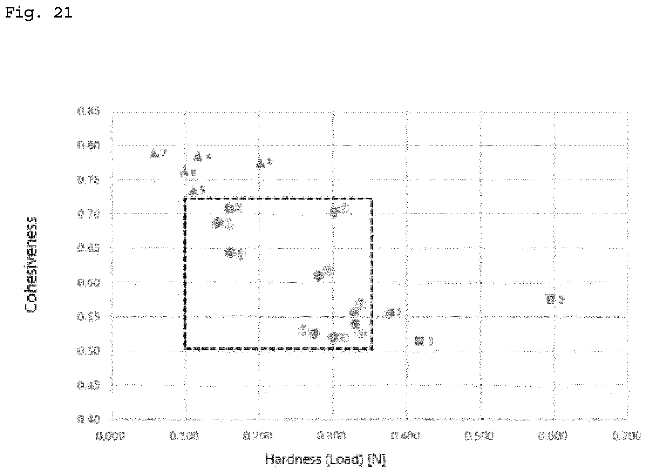

Table 5 and Fig. 21 show the results of the texture measurement.

**Table 5 Texture Measurement (No Fake Saliva) (Mean Value)**

| | **Hardness (Load) [N]** | **Cohesiveness** |
|---|---|---|
| **Example 1** | **0.143** | **0.69** |
| **Example 2** | **0.159** | 0.71 |
| Example 3 | 0.328 | 0.56 |
| Example 5 | 0.275 | 0.53 |
| Example 6 | 0.160 | 0.64 |
| Example 7 | 0.301 | 0.70 |
| Example 8 | 0.300 | 0.52 |
| Example 9 | 0.330 | 0.54 |
| **Example 10** | **0.280** | **0.61** |
| **Comparative Example 1** | **0.377** | **0.55** |
| **Comparative Example 2** | **0.417** | 0.51 |
| **Comparative Example 3** | **0.595** | 0.58 |
| **Comparative Example 4 (Commercially Available Bread A)** | **0.117** | 0.78 |
| **Comparative Example 5 (Commercially Available Bread B)** | **0.111** | 0.73 |
| **Comparative Example 6 (Commercially Available Bread C)** | **0.201** | 0.77 |
| **Comparative Example 7 (Commercially Available Bread D)** | **0.058** | 0.79 |
| **Comparative Example 8 (Commercially Available Bread E)** | **0.099** | **0.76** |

As shown in Fig. 21, the bread-like foods produced in Experimental Example 1 all had a hardness (load) of less than 0.35 N, which was different from the hardness (load) of the bread of Comparative Examples 1 to 3 (0.377 N or more), and were determined to be soft in terms of "hardness at the start of mastication." Additionally, the bread-like foods produced in Experimental Example 1 all had a cohesiveness of 0.71 or less, which was different from that of the bread of Comparative Examples 4 to 8 (0.73 or more), and the bread-like foods themselves were determined to be "easy" in terms of "ease of breaking down" (easy to break). From the results, the bread-like foods produced in Experimental Example 1 were found to have a texture different from that of wheat bread in terms of at least hardness at the start of mastication and ease of breaking down the food (i.e., the texture without saliva absorbed).

### (b) Creep Test

Table 6 shows the results of the creep test.

**Table 6 Creep Test Results**

| **Sample** | **Elastic Modulus E⁰ [Pa]** | **Elastic Modulus E 1 [Pa]** | **Viscosity η1 [Pa·s]** | **Viscosity ηN [Pa·s]** |
|---|---|---|---|---|
| **Example 1** | **192** | **4,438** | **38,603** | **460,660** |
| **Example 2** | **422** | **12,778** | **116,744** | 616,977 |
| **Example 3** | **440** | **8,301** | **75,585** | 613,814 |
| **Example 5** | **408** | **8,990** | **80,174** | 647,868 |
| **Example 6** | **359** | **7,646** | **66,061** | 247,671 |
| **Example 7** | **460** | **8,701** | **77,325** | 813,918 |
| **Example 8** | **441** | **6,234** | **59,577** | 308,712 |
| **Example 9** | **380** | **5,098** | **46,802** | 528,693 |
| **Example 10** | **433** | **11,030** | **107,915** | **603,125** |
| **Comparative Example 1** | **424** | **12,073** | **103,048** | **1,325,077** |
| **Comparative Example 2** | **434** | **10,537** | **90,315** | 1,488,483 |
| **Comparative Example 3** | **466** | **9,532** | **79,239** | **860,366** |
| **Comparative Example 4 (Commercially Available Bread A)** | **187** | **7,467** | **61,688** | **909,943** |
| **Comparative Example 5 (Commercially Available Bread** B) | **183** | **7,849** | **76,984** | 1,108,724 |
| **Comparative Example 6 (Commercially Available Bread** C) | **165** | **9,948** | **76,096** | 1,251,747 |
| **Comparative Example 7 (Commercially Available Bread** D) | **170** | **10,421** | **83,430** | 1,401,357 |
| **Comparative Example 8 (Commercially Available Bread E)** | **168** | **13,172** | **100,967** | **1,755,492** |

As shown in Table 6, the bread-like foods produced in Experimental Example 1 were confirmed to have an instantaneous elastic modulus (elastic modulus E0) within the range of 190 to 460 Pa, a delayed elastic modulus (elastic modulus E1) within the range of 4400 to 13000 Pa, a delayed viscosity (viscosity η1) within the range of 38000 to 117000 Pa•s, and a permanent viscosity (viscosity ηN) within the range of 24000 to 820000 Pa•s. Of these viscoelastic properties, the instantaneous elastic modulus, delayed elastic modulus, and delayed viscosity were somewhat similar to those of the wheat bread of the Comparative Examples, but the permanent viscosity was clearly different, being significantly lower than that of the wheat bread of the Comparative Examples (860360 to 1755492 Pa·s). Additionally, whereas the compressed samples of the wheat bread of the Comparative Examples were all flattened as a hunk without breaking, the compressed samples of the bread-like foods of the Examples were somewhat broken and stretched out. From the results, the bread-like foods of the Examples themselves are considered to be more easily broken than the wheat bread of the Comparative Examples (i.e., when being put into the mouth and chewed, the bread-like food is easily disintegrated).

### Experimental Example 2: Texture Evaluation of Expanded Food

The bread-like foods (Examples 1 to 3 and 5 to 10) and bread (Comparative Examples 1 to 3) made in Experimental Example 1 and commercially available bread A to E (Comparative Examples 4 to 8) listed in Table 4 ("test foods" below) were eaten by a panel of experienced evaluators. The panel evaluated the texture, specifically "hardness at the start of mastication," "stickiness developing during mastication in the mouth," and "ease of breaking down the bolus during mastication in the mouth. These textures correspond to the textures felt at each stage of the mastication process described below. All of the panel members were skilled evaluators who received in-house sensory evaluation training and have more than 10 years of testing experience in performing sensory evaluation tests on a daily basis in their work (sensory evaluation experts).

### Expanded Food Intake Process

The intake process of expanded food, including bread, consists of the mastication process and the deglutition process. The mastication process in the oral cavity can be divided into four stages: the first mastication stage, the early mastication stage, the middle mastication stage, and the late mastication stage.
First mastication stage: the stage in which food is first chewed with the teeth. In regards to the texture, this is the stage at which "hardness at the start of mastication" is felt.
Early mastication stage: this stage corresponds to the first 1/3 of the divided three stages of the period from the start of mastication of food in the oral cavity until deglutition (mastication period). This stage corresponds to the first 1/3 of the total number of mastication times from the start of mastication out of the number of mastication times required in the period from the start of mastication after food is placed in the oral cavity until deglutition ("the total number of mastication times" below). In regards to the texture, this is the stage in which air bubbles in expanded food are broken by mastication, and giving the sensation of compression (hardness). Middle mastication stage: this stage corresponds to the period for the number of mastication times from the point of 1/3 to 2/3 of the total number of mastication times from the start of mastication. In regards to the texture, this is the stage in which adherence of the compressed bolus in the oral cavity increases as it is mixed with saliva by mastication, resulting in "stickiness" (stickiness felt in the oral cavity when food is mixed with saliva).
Late mastication stage: this stage corresponds to the period for the number of mastication times from the point of 2/3 to 3/3 of the total number of mastication times from the start of mastication. In regards to the texture, this is the stage in which decreases in hardness and adhesiveness (i.e., "ease of breaking down the bolus") are felt because the bolus absorbs saliva to increase its water content due to continued mastication of the bolus in the oral cavity.

Assuming the consumer's purchase and consumption, the test foods of Examples 1 to 3 and 5 to 10 and Comparative Examples 1 to 3 were cooled after being made, placed in a plastic bag, and allowed to stand for one day at room temperature. For commercially available bread A to E (Comparative Examples 4 to 8), products three days before their expiration date were purchased and used. Immediately before the sensory test, the crust of each test food was cut off from the four sides, and the remainder was cut to 5 cm in length and width and 1 cm in thickness (a single test specimen), and immediately used in the sensory test.

The sensory evaluation was conducted by hitting the teeth against the eating side of the test food (see Fig. 2 (1)) and chewing the test food. The amount of a morsel of the test specimen was set such that a single test specimen could be consumed in two bites. First, the panel members ate a test food, and the number of mastication times required until deglutition of a bite was measured. Second, the following evaluation was performed according to the following methods: "hardness at the start of mastication" when the same test food was again chewed with the teeth on the eating side (first mastication stage), "stickiness," which is adherence felt on the teeth or oral cavity during the period corresponding to the number of mastication times from the point of 1/3 to 2/3 of the total number of mastication times over the period from the start of mastication in the mouth until deglutition (middle mastication stage), and "ease of breaking down the bolus" felt during the period corresponding to the number of mastication times from the point of 2/3 to deglutition (at a point of 3/3 of the total number of mastication times) of the total number of mastication times (late mastication stage).

### Evaluation of Hardness at the Start of Mastication

Hardness at the start of mastication was evaluated according to a scoring method (7-point scale). Specifically, standard product (1) and standard product (2) were prepared as reference samples to standardize each panel's internal standards. The "hardness at the start of mastication" of standard product (1) was set as "1" (soft) and the "hardness at the start of mastication" of standard product (2) was set as "7" (hard). The panel members were asked to score the hardness at the start of mastication of each test food as compared with standard products (1) and (2). The criteria for "score 1" and "score 7" were discussed among the panel members beforehand to avoid any inconsistency in judging criteria among them. Standard product (1) was bread with the same formula as the bread of Comparative Example 1 and was made by relaxing the baking conditions to 170°C for 30 minutes. Standard product (2) was made by cutting off the crust of the four sides of standard product (1), cutting the remainder to 5 cm in length and width and 1 cm in thickness, baking it in a toaster oven for 3 minutes, and then cooling it to room temperature. The scoring method was performed based on the description on pages 186 to 187 of Kanno Hyokashi Text (edited by Japanese Society for Sensory Evaluation, 2009, Publisher: Kenpakusha). To standardize each panel's internal standards for implementing the sensory evaluation, a pre-sensory evaluation test on some expanded foods was conducted according to the method above, and the sense of "hardness at the start of mastication" was discussed (trial evaluation and calibration) among the panel members to ensure that the panel members had a common understanding. This evaluation was conducted on a blind-study basis so that each test food was unknown.

### Evaluation of stickiness

Stickiness was evaluated according to a ranking method (7 scales). Specifically, the panel members ate each test food, arranged them in order in which they felt the sense of "stickiness," and further categorized them into 7 scales (1: no sense of stickiness or lowest level of stickiness, 7: highest level of stickiness). To standardize each panel's internal standards for implementing the sensory evaluation, a pre-sensory evaluation test on some expanded foods was conducted according to the method above, and the sense of "stickiness" was discussed (trial evaluation and calibration) among the panel members to ensure that the panel members had a common understanding. This evaluation was conducted on a blind-study basis so that each test food was unknown.

### Evaluation of Ease of Breaking Down Bolus

The ease of breaking down the bolus was evaluated according to a ranking method (7 levels). Specifically, the panel members ate each test food, arranged them in order of "ease of breaking down the bolus," and further categorized them into seven levels (1: hardest to break down the bolus, 7: easiest to break down the bolus). To standardize each panel's internal standards for implementing the sensory evaluation, a pre-sensory test on some expanded foods was conducted according to the method above, and the sense of "ease of breaking down the bolus" was discussed (trial evaluation and calibration) among the panel members to ensure that the panel members had a common understanding. This evaluation was conducted on a blind-study basis so that each test food was unknown.

Tables 7 to 9 show the results. Examples 1 to 3 and Comparative Examples 1 and 4 were conducted by three panel members, and their average and standard deviation are shown. The other Examples and Comparative Examples were conducted by one of the three panel members, an expert of the sensory evaluation test on behalf of the panel.

**Table 7 (Hardness at the Start of Mastication)**

| | Example | | | | | | | | |
|---|---|---|---|---|---|---|---|---|---|
| | 1 | 2 | 3 | 5 | 6 | 7 | 8 | 9 | 10 |
| Score | 2.3 | 1.3 | 4.3 | 3 | 3 | 5 | 2.5 | 3.5 | 2 |
| Standard Deviation | 0.6 | 0.6 | 0.6 | - | - | - | - | - | - |

| | Comparative Example | | | | | | | |
|---|---|---|---|---|---|---|---|---|
| | 1 | 2 | 3 | 4 | 5 | 6 | 7 | 8 |
| Score | 2.3 | 3 | 4 | 1.3 | 1 | 2 | 3 | 2 |
| Standard Deviation | 0.6 | - | - | 0.6 | - | - | - | - |

**Table 8 (Stickiness)**

| | Example | | | | | | | | |
|---|---|---|---|---|---|---|---|---|---|
| | 1 | 2 | 3 | 5 | 6 | 7 | 8 | 9 | 10 |
| Score | 1.3 | 2 | 2.3 | 4 | 3 | 1 | 4 | 4 | 1.3 |
| Standard Deviation | 0.6 | 0 | 0.6 | - | - | - | - | - | - |

| | Comparative Example | | | | | | | |
|---|---|---|---|---|---|---|---|---|
| | 1 | 2 | 3 | 4 | 5 | 6 | 7 | 8 |
| Score | 6.3 | 6 | 7 | 6.7 | 6 | 7 | 6 | 6 |
| Standard Deviation | 0.6 | - | - | 0.6 | - | - | - | - |

**Table 9 (Ease of Breaking Down Bolus)**

| | Example | | | | | | | | |
|---|---|---|---|---|---|---|---|---|---|
| | 1 | 2 | 3 | 5 | 6 | 7 | 8 | 9 | 10 |
| Score | 6.7 | 6.7 | 5 | 5 | 6 | 5 | 5.5 | 4.5 | 6.7 |
| Standard Deviation | 0.6 | 0.6 | 1 | - | - | - | - | - | - |

| | Comparative Example | | | | | | | |
|---|---|---|---|---|---|---|---|---|
| | 1 | 2 | 3 | 4 | 5 | 6 | 7 | 8 |
| Score | 1.3 | 2 | 3 | 2 | 1 | 1 | 2 | 3 |
| Standard Deviation | 0.6 | - | - | 0 | - | - | - | - |

The hardness at the start of mastication is the overall texture felt not only from the hardness at break but also from resistance of an elastic matter. The hardness at the start of mastication is evaluated from both the hardness (N) in a texture measurement and the instantaneous elastic modulus in a creep test. The obtained sensory evaluation results were subjected to a test of the difference in average (t-test) between the two groups of the Examples and the Comparative Examples, and no significant difference was found in hardness at the start of mastication.

However, the sense of clinging (adhering) to the teeth and oral cavity (stickiness) in the middle mastication stage was significantly less in the bread-like foods in the Examples than in the bread made from wheat (wheat bread). The ease of breaking down the bolus in the late mastication stage was significantly higher in the bread-like foods in the Examples than in the wheat bread. In fact, a test of the difference in average (t-test) between the two groups of the Examples and the Comparative Examples using these results of the sensory evaluation found a significant difference (1% significance) in both the stickiness and ease of breaking down the bolus. This is probably because the bread-like foods in the Examples, as shown in Experimental Example 2, are easily broken under a load, disintegrate quickly in the oral cavity, and absorb saliva in the disintegrated state to thereby dissolve quickly. This indicates that although the bread-like foods in the Examples are soft when coming in contact with the teeth as with regular wheat bread, the bread-like foods are more easily disintegrated in the mouth (easily broken down due to a load in the oral cavity) than wheat bread, and have an easy-to-eat texture from both the mastication and deglutition perspectives.

## Claims

1. An expanded food containing a milk protein in a proportion of 75 mass% or more based on the total protein and not substantially containing a wheat-derived protein,
wherein
(A) the expanded food has (1) a hardness, as determined by a texture measurement, within the range of 0.10 to 0.35 N and (2) a cohesiveness, as determined by a texture measurement, within the range of 0.50 to 0.71, and/or
(B) the expanded food has values of (1) elastic modulus and (2) viscosity, as determined by a creep test, within the following ranges:
(1a) instantaneous elastic modulus: 190 to 460 Pa;
(1b) delayed elastic modulus: 4400 to 13000 Pa;
(2a) delayed viscosity: 38000 to 117000 Pa•s; and
(2b) permanent viscosity: 240000 to 820000 Pa•s.

2. The expanded food according to claim 1, wherein the milk protein contains a protein derived from a milk-fermented product.

3. The expanded food according to claim 1 or 2, wherein the expanded food contains one or more edible compositions that comprise a milk protein, and at least one of the edible compositions is a milk-fermented product.

4. The expanded food according to claim 1 or 2, which is obtained by subjecting a dough composition comprising (a) a milk protein in a proportion of 75 mass% or more based on the total protein, (b) a starch, (c) a leavening agent, and (d) water to heat treatment to cause the dough composition to expand and form a support matrix.

5. The expanded food according to claim 4, wherein (b) the starch is at least one member selected from the group consisting of natural starches and processed starches.

6. The expanded food according to claim 4, wherein (c) the leavening agent is at least one member selected from the group consisting of yeast, baking powder, baking soda, and ispata.

7. The expanded food according to claim 4, which further contains (e) a thickener.

8. The expanded food according to claim 1 or 2, which does not substantially contain a processed rice product.

9. The expanded food according to claim 1 or 2, which does not contain at least one member selected from the group consisting of eggs and egg-derived ingredients, or does not contain all members in the group.
